# EUROPÄISCHE PATENTSCHRIFT

(11) **EP 0 381 066 B1**
(45) Veröffentlichungstag und Bekanntmachung des Hinweises auf die Patenterteilung: **13.04.1994**
(21) Anmeldenummer: 90101559.4
(22) Anmeldetag: 26.01.1990
(51) Int. Cl.: B60J 7/043, B60J 7/05

(54) **Fahrzeugdach mit einem mittels eines Deckels verschliessbaren Dachausschnitt**
Vehicle roof with a roof cutout closable by a cover
Toit de véhicule ayant une découpure de toit fermant au moyen d'un couvercle

(30) Priorität: 02.02.1989 DE 3903035
(43) Veröffentlichungstag der Anmeldung: 08.08.1990
(73) Patentinhaber: Webasto AG Fahrzeugtechnik, D-82131 Stockdorf (DE)
(72) Erfinder: Schreiter, Thomas, D-8000 München 70 (DE); Fürst, Arpad, D-8034 Germering (DE); Wingen, Bernhard, D-8152 Feldkirchen (DE)

(56) Entgegenhaltungen:
- DE-A- 3 311 498
- DE-A- 3 807 961
- DE-B- 1 199 638

## Beschreibung

Die Erfindung bezieht sich auf ein Fahrzeugdach mit einem in einer festen Dachfläche ausgebildeten Dachausschnitt, der mittels eines Deckels wahlweise verschlossen oder mindestens teilweise freigelegt werden kann, wobei der Deckel durch Verschwenken um eine an oder nahe seiner Vorderkante liegende Schwenkachse mit seiner Hinterkante über die feste Dachfläche ausstellbar und über der Dachfläche nach hinten verschiebbar ist.

Fahrzeugdächer dieser Art sind als sogenannte Spoiler- oder Oberfirstschiebedächer bekannt (vergleiche z.B. DE-A- 33 11 498). Solche bekannte Fahrzeugdächer lassen jedoch lüftungstechnisch zu wünschen übrig. Insbesondere stellen sich in der Lüfterstellung bei rascher Fahrt relativ starke Windgeräusche ein, und das aerodynamische Verhalten des Fahrzeugs wird nachteilig beeinflußt (Erhöhung des C_{w}-Wertes).

Der im Anspruch 1 angegebenen Erfindung liegt die Aufgabe zugrunde, ein Fahrzeugdach zu schaffen, das unter Beibehaltung der bekannten Vorteile eines Spoilerdaches (wahlweise Freilegung des Dachausschnitts und dadurch Vermitteln eines kabriolettähnlichen Fahrgefühls bei großer Kopffreiheit für Fondpassagiere) eine Lüftung des Fahrzeuginnenraums unter verbesserten lüftungstechnischen Bedingungen und auf aerodynamisch besonders günstige Weise gestattet.

Diese Aufgabe wird erfindungsgemäß dadurch gelöst, daß bei einem Fahrzeugdach mit den Merkmalen des Oberbegriffs des Patentanspruchs 1 der Deckel wahlweise auch um eine an oder nahe seiner Hinterkante liegende Schwenkachse in eine Lüftungsstellung schwenkbar ist, in welcher die Deckelvorderkante unter Ausbildung eines im Bereich des vorderen Randes des Dachausschnittes liegenden Lüftungsspaltes unter die Dachfläche abgesenkt ist.
Das Fahrzeugdach nach der Erfindung erlaubt es, einen Lüftungsspalt im Bereich des vorderen Randes des Dachausschnitts und damit nahe dem vorderen Ende der festen Dachhaut auszubilden, was lüftungstechnisch von Vorteil für eine Enteisung und die Beseitigung von Beschlag auf der Frontscheibe ist. Dieser Lüftungsspalt befindet sich in der Zone des höchsten Unterdruckes, wodurch eine wirkungsvolle Entlüftung gewährleistet ist. Fahrer und Beifahrer werden durch den in der Lüfterstellung des Deckels entstehenden Luftzug nicht belästigt. Die in dieser Lüfterstellung auftretenden Windgeräusche sind besonders gering. Die Entlüftung erfolgt in diesem Fall, ohne daß Deckelteile über die Dachfläche nach oben vorragen, was ein aerodynamisch günstiges Fahrverhalten insbesondere bei hohen Fahrgeschwindigkeiten mit sich bringt. Der Deckel kann aber auch in der für Spoilerdächer üblichen Weise hinten ausgestellt und über der festen Dachfläche nach hinten verlagert werden, um den Dachausschnitt mehr oder weniger weit freizulegen, ohne daß dabei Kopffreiheit für Fondpassagiere verlorengeht. Die erfindungsgemäße Lösung ist selbst für kurze Autodächer hervorragend geeignet.

Vorteilhafte weitere Ausgestaltungen der Erfindung ergeben sich aus den Unteransprüchen.

Ausführungsbeispiele der Erfindung sind im folgenden anhand der Zeichnung näher erläutert. Dabei zeigen:
- Fign. 1, 2 und 3: eine perspektivische Teilansicht eines Kraftfahrzeugs mit einem erfindungsgemäß ausgebildeten Dach bei verschiedenen Deckelstellungen,
- Fign. 4 bis 7: schematische Längsschnitte durch ein Fahrzeugdach bei verschiedenen Deckelstellungen,
- Fig. 8: einen Längsschnitt ähnlich Fig. 4 für eine abgewandelte Dachausführung,
- Fign. 9 bis 12: schematische Längsschnitte entsprechend den Fign. 4 bis 7, die eine erste Ausführungsform der Versteilmechanik erkennen lassen,
- Fig. 13: eine Teildraufsicht auf die Verstellmechanik der Fign. 9 bis 12 bei in der vorderen Endstellung stehendem Deckel,
- Fign. 14 bis 17: Schnitte entlang den Linien XIV-XIV, XV-XV, XVI-XVI bzw. XVII-XVII der Fig. 13,
- Fign. 18, 19; 20, 21; 22 und 23: schematische Längsschnitte durch ein Fahrzeugdach mit einer abgewandelten Ausführungsform der Verstellmechanik für verschiedene Deckelstellungen, wobei in den Fign. 18 und 20 der Deckel für die Längsschnitte der Fign. 19 bzw. 21 nochmals gesondert dargestellt ist, um das Zusammenwirken der deckelseitigen Kulissen mit den zugehörigen Kulissenstiften deutlich erkennen zu lassen,
- Fig. 24: eine Teildraufsicht auf die Verstellmechanik gemäß den Fign. 18 bis 23 für die Deckelstellung gemäß den Fign. 20 und 21,
- Fig. 25: einen Schnitt entlang der Linie XXV-XXV der Fig.24,
- Fig. 26: einen Schnitt entlang der Linie XXVI-XXVI der Fig. 21,
- Fig. 27: einen Schnitt entlang der Linie XXVII-XXVII der Fig. 23,
- Fign. 28, 29; 30; 31 und 32: schematische Längsschnitte durch das Fahrzeugdach für eine weiter abgewandelte Ausführungsform der Verstellmechanik, wobei in Fig. 28 wiederum der Deckel für die Deckelstellung gemäß Fig. 29 nochmals gesondert herausgezeichnet ist,
- Fig. 33: einen Längsschnitt durch eine Betätigungseinrichtung für die Verstellmechanik gemäß den Fign. 28 bis 32 sowie
- Fig. 34: eine Ansicht der Betätigungseinrichtung der Fig. 33, von unten gesehen.

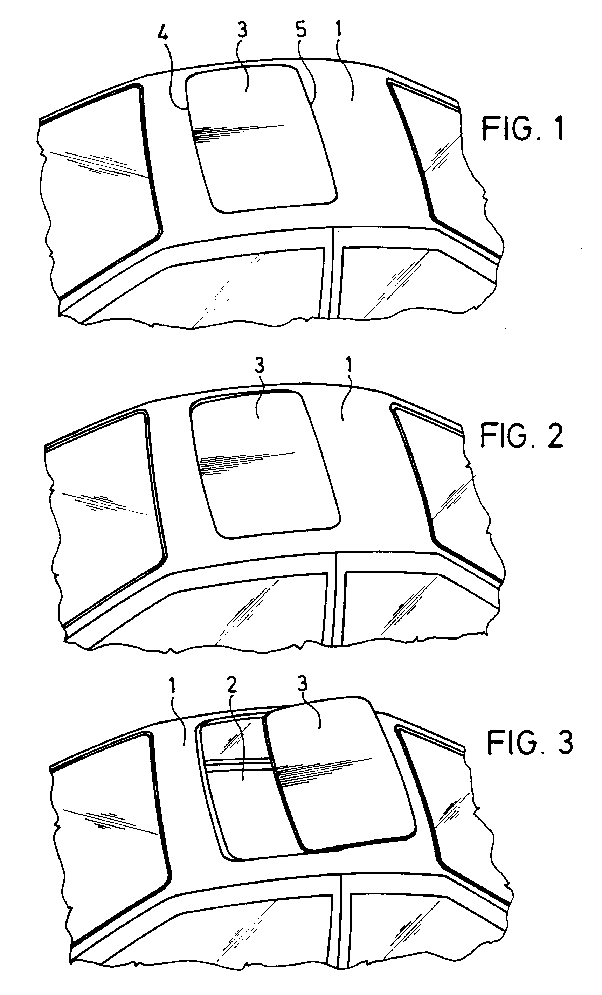

Entsprechend den perspektivischen Darstellungen der Fign. 1 bis 3 ist in einer festen Dachfläche 1 ein Dachausschnitt 2 ausgebildet. Der Dachausschnitt 2 kann mittels eines starren Deckels 3 verschlossen werden (Fig. 1). Der Deckel kann nach Art eines sogenannten Spoilerdaches durch Verschwenken um eine an oder nahe seiner Vorderkante 4 liegende Schwenkachse mit seiner Hinterkante 5 über die Dachfläche 1 ausgestellt und über der Dachfläche nach hinten verschoben werden, um dadurch den Dachausschnitt 2 mehr oder weniger weit freizulegen. Wahlweise kann der Deckel 3 aber auch um eine an oder nahe seiner Hinterkante 5 liegende (gedachte) Schwenkachse in eine Lüftungsstellung geschwenkt werden, in welcher die Deckelvorderkante 4 unter die Dachfläche 1 abgesenkt ist (Fig. 2).

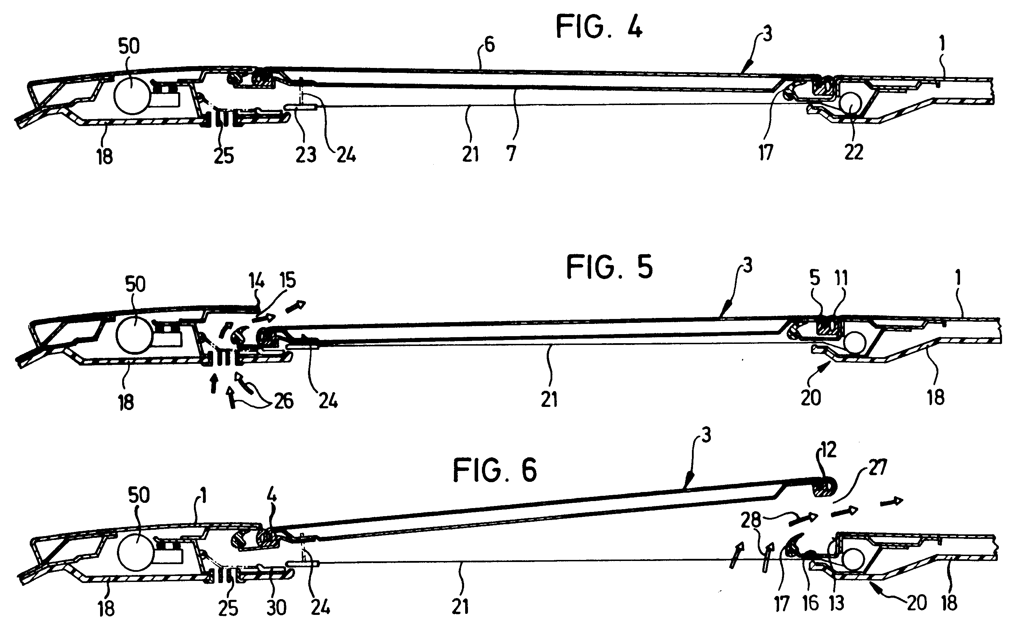

Die verschiedenen Deckelstellungen sind in den Fign. 4 bis 7 nochmals deutlicher zu erkennen. Bei diesem Ausführungsbeispiel ist der Deckel 3 als Blechdeckel mit einem Deckelaußenblech 6 und einem Deckelinnenblech 7 veranschaulicht. Der Deckel 3 weist im Bereich seiner Vorderkante 4 eine Wasserrinne 8 auf. In seiner vorderen Endstellung (Fign. 4, 5 und 6) greift der Deckel 3 mit dieser Wasserrinne 8 unter die feste Dachfläche 1. Dabei legt sich eine Dichtung 9, die auf den vorderen Rand 10 der Wasserrinne 8 aufgesteckt ist, gegen die Unterseite der festen Dachfläche 1 an. Der Deckel 3 ist ferner mit einer um seinen Umfang umlaufenden Deckeldichtung 11 versehen, bei der es sich im veranschaulichten Ausführungsbeispiel um eine Hohlkammerdichtung handelt,die auf einen nach unten abgewinkelten Rand 12 des Deckels 3 aufgesteckt ist und die im Bereich der Vorderkante des Deckels zwischen dem Rand 12 und der Wasserrinne 8 festgehalten wird. Die feste Dachhaut 1 bildet seitlich und hinten am Dachausschnitt 2 eine im wesentlichen lotrecht verlaufende Dichtungsfläche 13, gegen die sich in der Deckelschließstellung die Dichtung 11 mit ihrer Außenseite anlegt. Am vorderen Rand 14 des Dachausschnittes 2 ist die feste Dachhaut 1 dagegen flach ausgestaltet, um in der in Fig. 5 dargestellten Lüftungsstellung des Deckels 3 einen vorderen Lüftungsspalt 15 zwischen dem vorderen Rand 14 des Dachausschnitts 2 und der Vorderkante 4 des Deckels 3 entstehen zu lassen. An die den Dachausschnitt 2 hinten begrenzende Dichtungsfläche 13 schließt nach vorne eine Wasserrinne 16 an, die bei in vorderer Endstellung stehendem Deckel 3 dessen Hinterkante 5 untergreift. Am vorderen Rand der Wasserrinne 16 sitzt eine Dichtung 17, die mit der Unterseite des Deckels 3 in Eingriff kommt, wenn dieser geschlossen ist (Fig. 4) oder in seiner Lüfterstellung steht (Fig. 5).

Unterhalb der festen Dachfläche 1 ist ein fester Dachhimmel 18 angeordnet, der einen unter dem Dachausschnitt 2 liegenden Himmelausschnitt 19 aufweist. Der Himmelausschnitt 19 kann mittels eines verstellbaren Himmels verschlossen werden. Als verstellbarer Himmel ist bei dem veranschaulichten Ausführungsbeispiel eine insgesamt mit 20 bezeichnete Rollovorrichtung vorgesehen. Die Rollovorrichtung 20 weist eine Rollostoffbahn 21 auf,die auf eine Wickelspule 22 aufgewickelt werden und von dieser abgezogen werden kann. Die Wickelspule 22 ist quer zur Deckelverschieberichtung hinter und benachbart dem Dachausschnitt 2 und dem Himmelausschnitt 19 zwischen der Dachfläche 1 und dem festen Dachhimmel 18 gelagert. Das vordere freie Ende der Rollostoffbahn 21 bzw. eine damit verbundene Rollo-Endleiste 23 ist mit dem Deckel 3 über eine bei 24 angedeutete, nahe der Deckelvorderkante 4 sitzende Mitnehmeranordnung 24 gegekuppelt, die eine Höhenverstellung des Deckels 3 gegenüber der Rollostoffbahn 21 zuläßt. Ein langgestrecktes, quer zur Verschieberichtung des Deckels 3 verlaufendes Lüftungsgitter 25 ist in einen Ausbruch des festen Dachhimmels 18 vor dem Himmelausschnitt 19 eingesetzt.

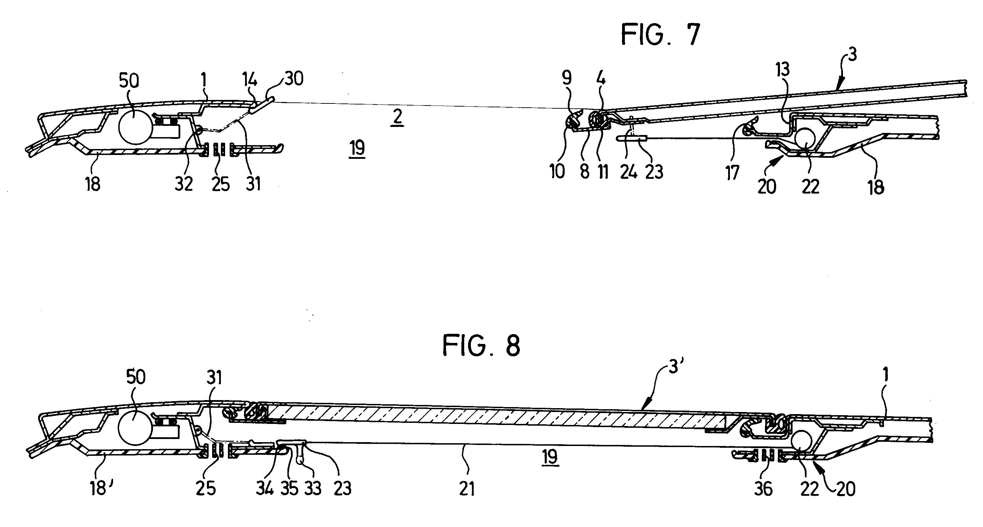

Wenn die Vorderkante 4 des Deckels 3 entsprechend Fig. 5 in die Lüftungsstellung abgesenkt ist und während der Fahrt des Fahrzeuges an der Außenseite der festen Dachfläche 1 in deren vorderem Bereich ein Unterdruck gegenüber dem im Fahrgastraum herrschenden Druck entsteht, bildet sich ein in Fig. 5 bei 26 mit Pfeilen angedeuteter Luftstrom aus. Dieser Luftstrom tritt durch das Lüftungsgitter 25 und den vorderen Lüftungsspalt 15 hindurch. Beim Verschwenken des Deckels 3 in die Lüftungsstellung gemäß Fig. 5 wird, wie gezeigt, die Hinterkante 5 des Deckels mindestens näherungsweise in Höhe der festen Dachfläche 1 gehalten. Wie ein Vergleich der Fign. 5, 6 und 7 erkennen läßt, wird beim Verstellen des Deckels 3 von der Lüftungsstellung mit abgesenkter Vorderkante 4 (Fig. 5) in die zurückgeschobene Stellung (Fig. 7) die Deckelvorderkante zu einer nach oben gerichteten Bewegung veranlaßt. Vor dem Zurückschieben des Deckels 3 wird die Deckelhinterkante 5 so weit über die Dachfläche 1 ausgestellt, daß zwischen der Deckelhinterkante und der Dachfläche ein hinterer Lüftungsspalt 27 entsteht (Fig. 6). Durch den Lüftungsspalt 27 kann in dieser Deckelstellung ein in Fig. 6 mit Pfeilen angedeuteter Luftstrom 28 hindurchtreten.

Im Bereich des vorderen Randes 14 des Dachausschnitts 2 ist ein Windabweiser 30 angeordnet, der über Schwenkarme 31 um eine Gelenkachse 32 verschwenkt werden kann. Der Windabweiser 30 wird in Abhängigkeit von der Deckelverschiebebewegung zwischen der in den Fign. 4 bis 6 veranschaulichten Ruhestellung und einer in Fig. 7 gezeigten Arbeitsstellung verstellt. Die Verstellmechanik kann auf beliebige, an sich bekannte Weise aufgebaut sein.

Fig. 8 zeigt die Verwendung eines Deckels 3' aus durchscheinendem oder durchsichtigem Werkstoff (d.h. eines sogenannten Glasdeckels). Bei dieser Ausführungsform ist die Mitnehmeranordnung 24 weggelassen. Statt dessen ist an der Rollo-Endleiste 23 eine Handhabe 33 vorgesehen, die es erlaubt, die Rollovorrichtung 20 unabhängig von der Deckelverschiebestellung zu betätigen. Die Rollostoffbahn 21 läßt sich in ausgezogener Stellung fixieren. Dazu ist beispielsweise am vorderen Ende der Endleiste 23 ein Rasthaken 34 vorgesehen, der mit einem dachfesten Widerlager 35 zusammenwirkt. Es versteht sich, daß gegebenenfalls auch Mittel vorhanden sein können, die ein lösbares Festlegen der Rollostoffbahn in einer oder mehreren vorbestimmten Zwischenstellungen gestatten. Bei der Ausführungsform gemäß Fig. 8 ist zusätzlich zu dem Lüftungsgitter 25 ein langgestrecktes Lüftungsgitter 36 vorgesehen, das in einen quer zur Verschieberichtung des Deckels 3' verlaufenden Durchbruch des festen Dachhimmels 18' hinter dem Himmelausschnitt 19 eingesetzt ist. Wenn der Deckel 3' entsprechend Fig. 6 mit seiner Hinterkante über die Dachfläche 1 ausgestellt wird, kann sich ein Luftstrom ausbilden, der durch das Lüftungsgitter 36 hindurchtritt. Um diesen Luftstrom auch bei ausgezogener Rollovorrichtung 20 nicht zu behindern, kann die Rollostoffbahn 21 in dem im ausgezogenen Zustand über dem Lüftungsgitter 36 liegenden Bereich mit einem entsprechenden Ausschnitt versehen sein.

Dem Deckel werden die vorstehend erläuterten Bewegungen über eine Verstellmechanik aufgezwungen. Bevorzugte Ausführungsbeispiele dieser Verstellmechanik sind nachstehend näher erläutert. Dabei versteht es sich, daß entsprechende Führungs- und Verstellmittel an beiden Seiten des Deckels und des Dachausschnitts vorgesehen sind, die vorzugsweise spiegelsymmetrisch zueinander ausgebildet sind. Nachstehend ist daher nur die Verstellmechanik auf der jeweils einen Deckelseite beschrieben.

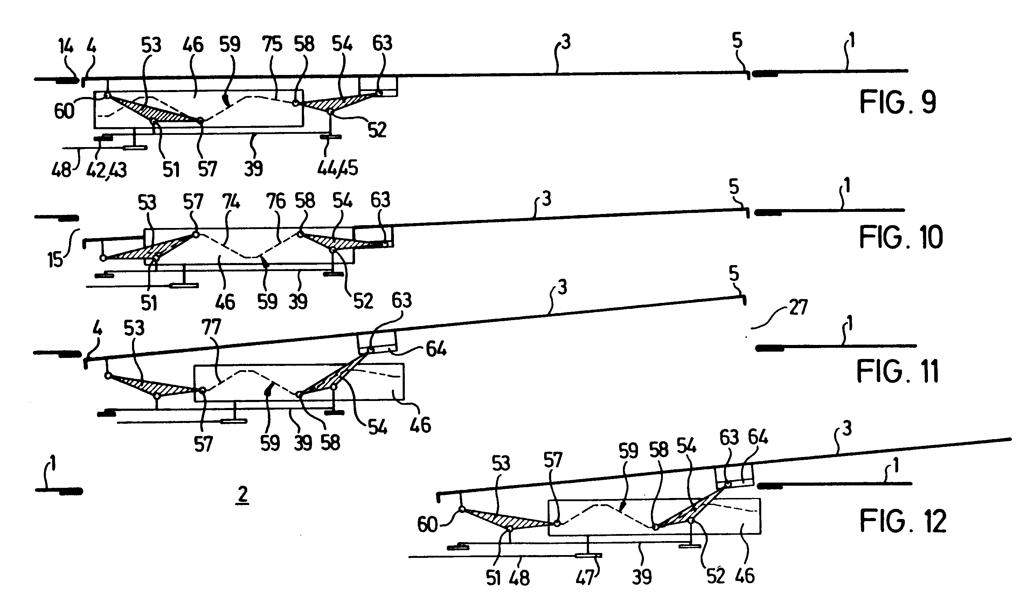

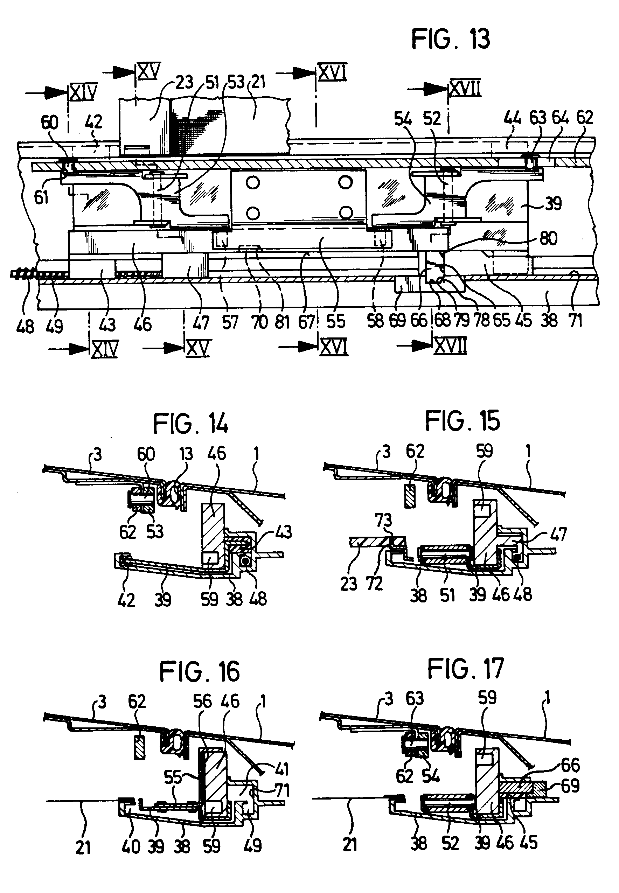

Im Falle der Ausführungsform nach den Fign. 9 bis 17 erstreckt sich entlang den Seitenrändern des Dachausschnitts 2 unterhalb der festen Dachfläche 1 jeweils eine mit dem Fahrzeug fest verbundene Führungsschiene 38. Die Führungsschienen 38 können gegebenenfalls auch untereinander unter Bildung eines in der Draufsicht U-förmigen oder geschlossenen Rahmens verbunden sein. Für diesen Zweck ist die Führungsschiene 38 an der dem Dachausschnitt 2 zugewendeten Seite mit einer ersten Führungsbahn 40 und an der von dem Dachausschnitt 2 abgewendeten Seite mit einer zweiten Führungsbahn 41 versehen, die beide parallel zu der betreffenden Seitenkante des Dachausschnitts 2 verlaufen. In jeder der beiden Führungsbahnen 40 und 41 ist jeweils ein vorderer Gleitschuh 42 bzw. 43 und ein hinterer Gleitschuh 44 bzw. 45 des Schlittens 39 gleitbeweglich angeordnet (vergleiche insbesondere Fign. 13 und 14). Auf dem Schlitten 39 ist eine Steuerkulisse 46 in Deckelverschieberichtung gleitbeweglich gelagert. Die Steuerkulisse 46 ist über einen Mitnehmer 47 (Fign. 13 und 15) mit einem drucksteifen Antriebskabel 48 fest verbunden. Das vorzugsweise als Gewindekabel ausgebildete Antriebskabel 48 ist in einer weiteren Führungsbahn 49 der Führungsschiene 38 längsverschiebbar. Das Antriebskabel 48 wird ebenso wie das entsprechende Antriebskabel auf der anderen Dachseite mittels eines Antriebsmotors 50 (Fign. 4 bis 8) längsverstellt, der im veranschaulichten Ausführungsbeispiel zwischen der festen Dachfläche 1 und dem Dachhimmel 18 bzw. 18' vor dem Dachausschnitt 2 untergebracht ist.

Der Schlitten 39 trägt einen quer zur Deckelverschieberichtung ausgerichteten vorderen Schwenkbolzen 51 (Fign. 13 und 15) sowie in Längsabstand von dem Schwenkbolzen 51 und parallel zu diesem einen hinteren Schwenkbolzen 52 (Fign. 13 und 17). Auf dem Schwenkbolzen 51 ist ein vorderer Ausstellhebel 53 schwenkbar gelagert, während auf dem hinteren Schwenkbolzen 52 ein hinterer Ausstellhebel 54 um die Schwenkbolzenachse schwenkbar gelagert ist. Zwischen den Ausstellhebelsn 53 und 54 sitzt ein mit dem Schlitten 39 fest verbundenes Stützblech 55, das zusammen mit dem Schlitten 39 eine Führungsbahn 56 (Fig. 16) für die Steuerkulisse 46 bildet. Die Schwenkbolzen 51 und 52 wirken jeweils mit dem mittleren Bereich des Ausstellhebels 53 bzw. des Ausstellhebels 54 zusammen. An den einander zugewendeten Enden der Ausstellhebel 53 und 54 sitzt jeweils ein parallel zu den Schwenkbolzen 51 und 52 verlaufender Kulissenstift 57 bzw. 58. Die Kulissenstifte 57 und 58 greifen in eine Kurvenbahn 59 der Steuerkulisse 46 ein. Am vorderen Ende des vorderen Ausstellhebels 53 ist ein zum Schwenkbolzen 51 parallel ausgerichteter Gelenkbolzen 60 angeordnet, der in einer zylindrischen Öffnung 61 eines mit dem Deckel 3 verbundenen Deckelträgers 62 drehbar gelagert ist. Der hintere Ausstellhebel 54 trägt an seinem hinteren Ende einen zu dem Schwenkbolzen 52 parallel ausgerichteten Gelenkbolzen 63. Der Gelenkbolzen 63 ist in einem sich in Längsrichtung des Deckels 3 erstreckenden Langloch 64 des Deckelträgers 62 drehbar und längsverschiebbar geführt.

In einer nach oben offenen Quernut 65 (Fig. 13) des hinteren Gleitschuhs 45 ist innerhalb der Führungsbahn 41 ein Riegel 66 quer zur Deckelverschieberichtung verschiebbar geführt. Solange der Deckel 3 in seiner vorderen Endstellung steht, d.h. die Schließstellung (Fig. 9), die Lüftungsposition mit abgesenkter Deckelvorderkante (Fig. 10), die Lüftungsposition mit hochgestellter Deckelhinterkante (Fig. 11) oder eine Zwischenstellung zwischen diesen Stellungen einnimmt, hält die Steuerkulisse 46 mit ihrer Seitenfläche 67 den Riegel 66 in der in den Fign. 13 und 17 veranschaulichten Stellung, in welcher der Riegel 66 mit einer Ausnehmung 68 einer Arretierung 69 in Eingriff steht. Die Arretierung 69 ist mit der Führungsschiene 38 fest verbunden. Wird, die Steuerkulisse 46 ausgehend von der Stellung gemäß Fig. 11 weiter nach hinten verschoben, wird auf den Riegel 66 eine Kraft ausgeübt, die den Riegel 66 zu einer Bewegung quer zur Deckelverschieberichtung veranlaßt, wodurch der Riegel 66 außer Eingriff mit der Arretierung 69 kommt und sich statt dessen mit dem von der Arretierung 69 abgewendeten Ende in eine Aussparung 70 der Steuerkulisse 46 einlegt. Dadurch wird der Schlitten 39 mit der Steuerkulisse 46 auf Mitnahme gekuppelt. Diese Kupplung bleibt durch Anlage des Riegels 66 an einer Seitenfläche 71 der Führungsbahn 41 aufrechterhalten, bis der Deckel 3 aus einer zurückgeschobenen Stellung wieder seine vordere Endstellung gemäß Fig. 11 erreicht.

Die Ausführungsform gemäß den Fign. 9 bis 17 unterscheidet sich von derjenigen nach den Fign. 4 bis 7 bezüglich der Betätigung der Rollovorrichtung 20 dadurch, daß die Mitnehmeranordnung 24 weggelassen und stattdessen die Rollo-Endleiste 23 mit dem Schlitten 39 gekuppelt ist. Für diesen Zweck greift entsprechend Fig. 15 eine hochstehende Nase 72 des Schlittens 39 in eine Ausnehmung 73 der Endleiste 23 ein.

Die in den Fign. 9 bis 17 veranschaulichte Verstellmechanik funktioniert wie folgt. Wenn mittels des Antriebsmotors 50 und des Antriebskabels 48 die mit dem Antriebskabel 48 ständig auf Mitnahme gekuppelte Steuerkulisse 46 in ihre vordere Endstellung gemäß Fig. 9 gebracht ist, steht der Kulissenstift 57 am tiefsten Punkt der Kurvenbahn 59, wodurch der vordere Ausstellhebel 53 die Deckelvorderkante 4 so weit anhebt, daß sie bezüglich ihrer Höhenlage mit dem vorderen Rand 14 des Dachausschnitts 2 fluchtet. Gleichzeitig hält der hintere Ausstellhebel 54 durch Zusammenwirken des Kulissenstifts 58 mit der Kurvenbahn 59 die Deckelhinterkante 5 auf der Höhe der festen Dachfläche 1 im Bereich des hinteren Randes des Dachausschnitts 2.

Wird ausgehend von der Deckelschließstellung gemäß Fig. 9 die Steuerkulisse 46 über das Antriebskabel 48 nach hinten in die Position gemäß den Fign. 10 und 13 geschoben, wird eine Verlagerung des Schlittens 39 durch den Eingriff des Riegels 66 mit der Arretierung 69 verhindert. Der Kulissenstift 57 wandert entlang einem nach vorne ansteigenden Teil 74 der Kurvenbahn 59 nach oben. Dadurch wird der vordere Ausstellhebel 53 in den Fign. 9 und 10 entgegen dem Uhrzeigersinn um den Schwenkbolzen 51 verschwenkt. Über den Gelenkbolzen 60 wird der Deckel 3 in seinem vorderen Teil nach unten gezogen. Gleichzeitig bewegt sich der Kulissenstift 58 entlang einem Teil 75 der Kurvenbahn 59, der nach vorne weniger stark als der Kurvenbahnteil 74 ansteigt. Dies bedingt eine im Vergleich zur Schwenkbewegung des Ausstellhebels 53 geringere Schwenkbewegung des hinteren Ausstellhebels 54 im Uhrzeigersinn (in den Fign. 9 und 10). Dabei sind die Steigungen der Kurvenbahnteile 74 und 75 derart aufeinander abgestimmt, daß die Deckelhinterkante 5 beim Absenken der Deckelvorderkante 4 mindestens näherungsweise in Höhe der festen Dachfläche 1 gehalten wird (Fig. 10). Durch den vorderen Lüftungsspalt 15 kann der Luftstrom 26 hindurchtreten, wie dies anhand der Fig. 5 erläutert ist.

Wird die Steuerkulisse 46 ausgehend von der Stellung gemäß Fig. 10 weiter nach hinten geschoben (Fig. 11), bleibt der Schlitten 39 über den Riegel 66 weiterhin mit Bezug auf die Führungsschiene 38 arretiert. Der Kulissenstift 58 wandert auf einem nach vorne abfallenden Teil 76 der Kurvenbahn 59 nach unten. Der hintere Ausstellhebel 54 wird um den hinteren Schwenkbolzen 52 in den Fign. 10 und 11 entgegen dem Uhrzeigersinn verschwenkt. Durch das Zusammenwirken zwischen dem Gelenkbolzen 63 und dem Langloch 64 wird der Deckel 3 mit seiner Hinterkante 5 über die feste Dachfläche 1 ausgestellt. Gleichzeitig wandert der Kulissenstift 57 entlang einem gleichfalls nach vorne abfallenden Teil 77 der Kurvenbahn 59, wodurch ein Schwenken des vorderen Ausstellhebels 53 in den Fign. 10 und 11 im Uhrzeigersinn erfolgt. Die Deckelvorderkante 4 wird auf diese Weise zu einer nach oben gerichteten Bewegung veranlaßt. Dadurch wird bei vorgegebener Öffnungsweite des hinteren Lüftungsspalts 27 die Deckelneigung relativ klein gehalten. Der Luftstrom 28 kann, wie anhand der Fig. 6 erläutert ist, durch den Lüftungsspalt 27 hindurchtreten.

In der Lüftungsposition gemäß Fig. 11 hat der Kulissenstift 57 das vordere Ende der Kurvenbahn 59 erreicht. Wenn daher ausgehend von der Stellung gemäß Fig. 11 die Steuerkulisse 46 weiter nach hinten verschoben wird, sucht die Steuerkulisse 46 über den Kulissenstift 57 und den Ausstellhebel 53 den Schlitten 39 nach hinten mitzunehmen. Dadurch wird von dem Gleitschuh 45 eine nach hinten gerichtete Kraft auf den Riegel 66 ausgeübt. Aufgrund der Anlage einer Schrägfläche 78 des Reges 66 an einer entsprechend geneigten Schrägfläche 79 der Arretierung 69 entsteht eine quer zur Verschieberichtung der Steuerkulisse 46 gerichtete Kraftkomponente. Letztere bewirkt, daß der Riegel 66 aus der Ausnehmung 68 der Arretierung 69 heraus- und mit seinem von der Arretierung 69 abgewendeten Ende in die jetzt mit der Ausnehmung 68 in Querrichtung ausgerichtete Aussparung 70 hineingeschoben wird. Auf diese Weise wird die Verriegelung des Schlittens 39 gegenüber der Führungsschiene 38 gelöst, während gleichzeitig der Schlitten 3 mit der Steuerkulisse 46 auf Mitnahme gekuppelt wird. Dementsprechend werden bei weiterem Verstellen der Steuerkulisse 46 nach hinten der Schlitten 39 und mit ihm auch der Deckel 3 nach hinten geschoben (Fig. 12), um den Dachausschnitt 2 teilweise freizulegen.

Wird dagegen die Steuerkulisse 46 ausgehend von der Stellung gemäß Fig. 12 nach vorne verschoben, laufen die geschilderten Bewegungsvorgänge im umgekehrter Richtung ab. Erreicht die Steuerkulisse 46 die in Fig. 11 gezeigte Stellung, bewirken miteinander zusammenwirkende Schrägflächen 80 und 81 des Riegels 66 bzw. der Steuerkulisse 46 ein Verschieben des Riegels 66 in Eingriff mit der Arretierung 69 (Fig. 13).

Die vorstehende Erläuterung zeigt, daß die Verstellmechanik bei gleichsinniger Betätigung in der einen Richtung den Deckel 3 ausgehend von der Schließstellung (Fig. 9) zunächst in die Lüftungsstellung mit abgesenkter Vorderkante 4 (Fig. 10) bringt, dann den Deckel 3 mit seiner Hinterkante 5 ausstellt und schließlich den ausgestellten Deckel nach hinten schiebt. Umgekehrt bringt die Verstellmechanik bei gleichsinniger Betätigung in der entgegengesetzten Richtung den zurückgeschobenen Deckel 3 (Fig. 12) zunächst in seine vordere Endstellung mit ausgestellter Hinterkante 5 (Fig. 11), worauf der Deckel 3 in die Lüftungsstellung mit abgesenkter Vorderkante überführt (Fig. 10) und schließlich in die Schließstellung (Fig. 9) gebracht wird.

Bei der veranschaulichten Ausführungsform ist der vordere Ausstellhebel 53 an dem Deckelträger 62 angelenkt, während der hintere Ausstellhebel 54 mit dem Deckelträger 62 schwenkbar sowie gegenüber dem Deckelträger um eine begrenzte Strecke längsverschiebbar verbunden ist. Es versteht sich, daß die Anordnung umgekehrt auch so getroffen werden kann, daß der hintere Ausstellhebel 54 gegenüber dem Deckelträger 62 nur verschwenkbar ist, während der vordere Ausstellhebel 53 mit dem Deckelträger 62 schwenkbar und um eine begrenzte Strecke längsverschiebbar verbunden wird.

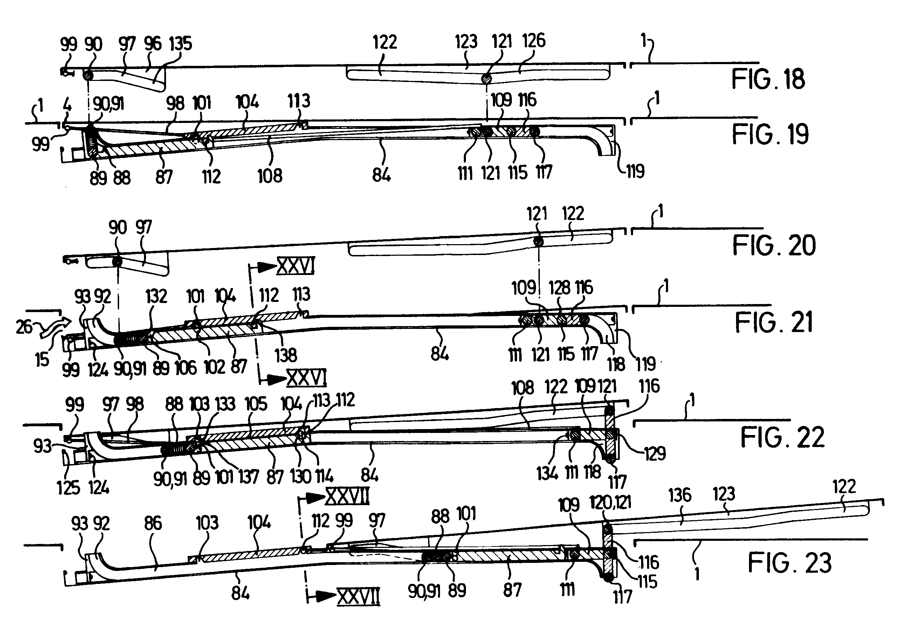

In den Fign. 18 bis 27 ist eine weitere Ausführungsform der Verstellmechanik veranschaulicht. Die Funktionsteile dieser Verstellmechanik sind wiederum auf beiden Seiten des Deckels zueinander spiegelsymmetrisch angeordnet, so daß eine Beschreibung für die eine Deckelseite ausreicht.

Entlang dem Seitenrand des Dachausschnittes 2 erstreckt sich in der Deckelverschieberichtung eine Führungsschiene 84, die ähnlich wie die Führungsschiene 38 der zuvor erläuterten Ausführungsform zum Teil unter der festen Dachfläche 1 und z.T. unter dem in der Schließstellung befindlichen Deckel 3 liegt, wobei die Führungsschienen 84 auf beiden Seiten des Dachausschnittes zu einem Rahmen zusammengefaßt werden können. Die Führungsschiene 84 bildet einen Kabelkanal 85, in dem das drucksteife Antriebskabel 48 längsverschiebbar geführt ist. An den Kabelkanal 85 grenzt in Querrichtung eine Führungsbahn 86 an. In der Führungsbahn 86 ist ein vorderer Schlitten 87 längsverschiebbar geführt. Am vorderen Ende des Schlittens 87 ist ein Ausstellhebel 88 über einen Gelenkstift 89 verschwenkbar angelenkt. Vom anderen Ende des Ausstellhebels 88 steht in Richtung auf den Dachausschnitt 2 ein Kulissenstift 90 quer zur Deckelverschieberichtung ab. Auf der dem Kulissenstift 90 in Querrichtung gegenüberliegenden Seite des Ausstellhebels 88 befindet sich ein Kulissenstift 91. Bei der veranschaulichten Ausführungsform sind die Kulissenstifte 90 und 91 gleichachsig angeordnet,und sie können einstückig miteinander verbunden sein. Der Kulissenstift 91 greift je nach der Verschiebestellung des Schlittens 87 in die Führungsbahn 86 der Führungsschiene 84 oder eine an deren vorderes Ende anschließende,nach oben und vorne gekrümmte Führungsbahn 92 einer mit der Führungsschiene 84 fest verbundenen vorderen Ausstellkulisse 93 ein.

Der Deckel 3 ist auf einem sich entlang dem Deckelseitenrand erstreckenden Deckelträger 94 montiert. Ein vorderer Abschnitt 95 des Deckelträgers 94 erstreckt sich seitlich nach außen bis unter die feste Dachfläche 1. An dem vom Dachausschnitt 2 abgewendeten äußeren Ende des Deckelträgerabschnitts 95 ist ein Steg 96 nach unten abgewinkelt. In dem Steg 96 ist eine Führungsbahn 97 ausgebildet, entlang deren der Kulissenstift 90 verschiebbar geführt ist.

Ein zug- und drucksteifes Kupplungsteil in Form einer Deckelarretierungsstange 98 greift mit ihrem seitlich abgewinkelten, zylindrischen vorderen Ende 99 in eine Querbohrung 100 des Steges 96. Die Achse der Querbohrung 100 ist mit der Deckelvorderkante 4 näherungsweise ausgerichtet, und die Arretierungsstange 98 kann um diese Achse mit Bezug auf den Deckelträger 94 und damit den Deckel 3 geschwenkt werden. An dem anderen, hinteren Ende der Deckelarretierungsstange 98 sitzen ein Bolzen 101 und eine Hilfsnase 102. Während des Verschwenkens des Deckels 3 aus der Schließstellung (Fign. 18 und 19) in die Lüftungsstellung mit abgesenkter Deckelvorderkante (Fign. 20 und 21) sowie während des Ausstellens der Deckelhinterkante 5 über die feste Dachfläche 1 greift der Bolzen 101 in eine Aussparung 103 einer an der Führungsschiene 84 befestigten Arretierung 104 ein. Dabei verhindert der Schlitten 87 mit seiner Oberseite 105, daß der Bolzen 101 die Aussparung 103 verläßt.

Nachdem der Schlitten 87 in die in Fig. 22 veranschaulichte Stellung gefahren ist, wird der Bolzen 101 zu einem Übergang von der Aussparung 103 der Arretierung 104 in eine vordere Aussparung 106 des Schlittens 87 gezwungen, wodurch der Deckel 3 über die Arretierungsstange 98 mit dem Schlitten 87 und infolgedessen auch mit dem Antriebskabel 48 auf Mitnahme nach hinten gekuppelt wird.

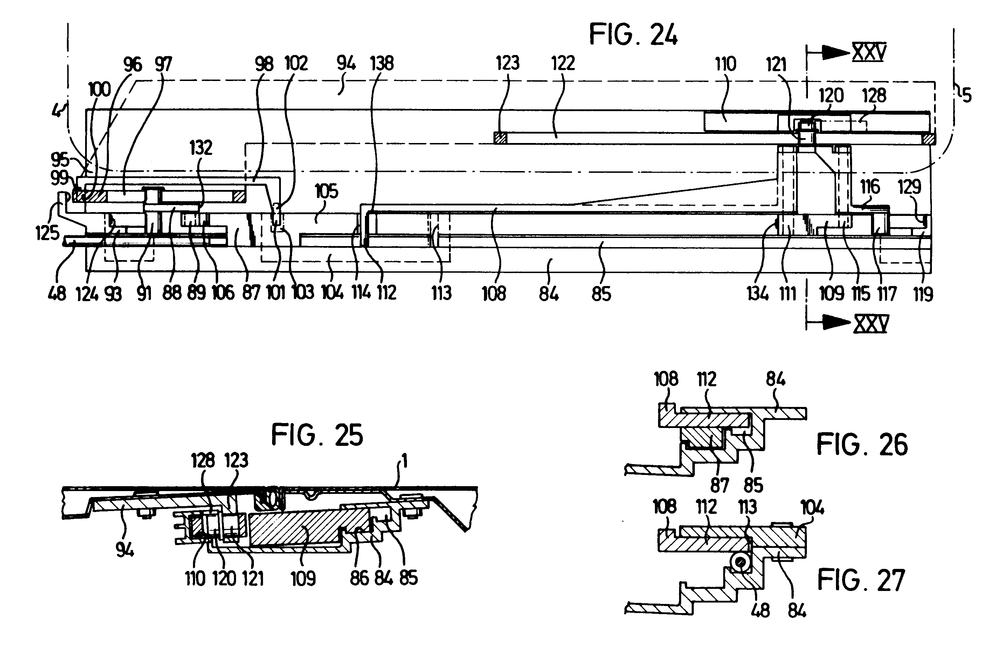

Über ein weiteres zug- und drucksteifes Element in Gestalt einer Verbindungsstange 108 ist der vordere Schlitten 87 mit einem hinteren Schlitten 109 kuppelbar. Der Schlitten 109 ist auf seiner vom Dachausschnitt 2 abliegenden Seite in der Führungsbahn 86 sowie an der dem Dachausschnitt 2 zugewendeten Seite in einer zu der Führungsbahn 86 parallelen weiteren Führungsbahn 110 der Führungsschiene 84 in Längsrichtung der Führungsschiene verschiebbar geführt. Die Verbindungsstange 108 ist an dem in Fahrzeuglängsrichtung vorderen Ende des Schlittens 109 über einen Gelenkstift 111 schwenkbar gelagert, der sich quer zur Deckelverschieberichtung erstreckt. Am vorderen Ende der Verbindungsstange 108 sitzt ein quer zur Deckelverschieberichtung verlaufender Bolzen 112, der in Abhängigkeit von der Verschiebebewegung des vorderen Schlittens 87 wechselweise in Eingriff mit einer hinteren Aussparung 113 der Arretierung 104 oder einer hinteren Aussparung 114 des vorderen Schlittens 87 gebracht werden kann. Wenn der Bolzen 112 mit der Aussparung 114 des Schlittens 87 in Eingriff steht, reicht er in die Führungsbahn 86 und den Kabelkanal 85 der Führungsschiene 84 hinein, wie dies insbesondere aus Fig. 26 zu erkennen ist.

An dem hinteren Schlitten 109 ist mittels eines parallel zu dem Gelenkstift 111 verlaufenden und hinter diesem sitzenden Gelenkstifts 115 ein hinterer Ausstellhebel 116 verschwenkbar angelenkt. An dem in der Deckelschließstellung hintenliegenden Ende des Ausstellhebels 116 (Fig. 19) sitzt ein Bolzen 117. Dieser greift je nach der Verschiebestellung des Schlittens 109 in die Führungsbahn 86 der Führungsschiene 84 oder in eine an das hintere Ende der Führungsbahn 86 anschließende, nach unten und hinten gekrümmte Führungsbahn 118 einer hinteren Ausstellkulisse 119 ein, die mit der Führungsschiene 84 fest verbunden ist. Der Ausstellhebel 116 trägt an seinem in der Deckelschließstellung vorne liegenden Ende zwei gegebenenfalls einstückig untereinander verbundene Bolzen 120 und 121. Der Bolzen 120 steht in der Deckelschließstellung mit der Führungsbahn 110 der Führungsschiene 84 in Eingriff und sichert in dieser Stellung den Deckel 3 gegen Ausreißen. Der Bolzen 121 greift dagegen ständig in eine sich in Deckellängsrichtung erstreckende Kulissenbahn 122 ein. Die Kulissenbahn 122 ist in einem unterhalb des Deckels 3 liegenden hinteren Abschnitt 123 des Deckelträgers 94 ausgebildet.

Die Verstellmechanik gemäß den Fign. 18 bis 27 arbeitet wie folgt. Wenn mittels des Antriebsmotors 50 und des Antriebskabels 48 der mit dem Antriebskabel ständig verbundene vordere Schlitten 87 in seine vordere Endstellung (Fig. 19) gebracht ist, stößt das vordere Ende des vorderen Schlittens 87 an einem Anschlag 124 der vorderen Ausstellkulisse 93 an. Der vordere Ausstellhebel 88 ist in eine im wesentlichen lotrechte Stellung gebracht, in welcher der Kulissenstift 91 am oberen Ende der Führungsbahn 92 steht. Der Kulissenstift 90 befindet sich am vorderen Ende der Führungsbahn 97. Auf diese Weise hält der Ausstellhebel 88 den Deckel 3 im Bereich seiner Vorderkante 4 auf der gleichen Höhe wie der an den Dachausschnitt 2 nach vorne anschließende Teil der festen Dachfläche 1. Der Bolzen 101 der Deckelarretierungsstange 98 wird mittels des Schlittens 87 in der vorderen Aussparung 103 der Arretierung 104 gehalten. Dadurch ist der Deckel 3 gegen eine Verschiebebewegung gesichert. Der Bolzen 112 am vorderen Ende der Verbindungsstange 108 wird von der Arretierung 104 in der hinteren Aussparung 114 des Schlittens 87 gehalten. Infolgedessen ist der hintere Schlitten 109 mit dem vorderen Schlitten 87 gekuppelt. Der hintere Ausstellhebel 116 nimmt eine mit der Längsrichtung der Führungsschiene 84 ausgerichtete Position ein, in welcher er über den in die Kulissenbahn 122 eingreifenden Bolzen 121 den Deckel 3 in seinem hinteren Bereich mit der festen Dachfläche 1 bezüglich seiner Höhenlage ausgerichtet hält. Gleichzeitig legt sich der Bolzen 120 in die Führungsbahn 110 der Führungsschiene 84 ein, wodurch der Deckel 3 gegen Ausreißen gesichert wird. Bei der veranschaulichten Ausführungsform ist im vorderen Bereich der Führungsschiene 84 ein dachfester, beispielsweise mit der Führungsschiene 84 oder der vorderen Ausstellkulisse 93 verbundener Anschlag 125 vorgesehen, der in der Deckelschließstellung mit dem vorderen Ende des Deckelträgers 94 zusammenwirkt.

Wird der vordere Schlitten 87 über das Antriebskabel 48 ausgehend von seiner vorderen Endstellung (Fig. 19) nach hinten verschoben, wandert der Kulissenstift 91 in der Führungsbahn 92 der vorderen Ausstellkulisse 93 nach unten, wodurch der vordere Ausstellhebel 88 um den Gelenkstift 89 in den Fign. 19 und 21 entgegen dem Uhrzeigersinn verschwenkt wird. Infolge des Eingriffs zwischen dem Kulissenstift 90 und der deckelfesten Führungsbahn 97 bewirkt dies ein Absenken des vorderen Deckelendes 4 in die Lüftungsposition gemäß den Fign. 20, 21 und 24. Der Bolzen 101 am hinteren Ende der Deckelarretierungsstange 98 wird von der Oberseite 105 des Schlittens 87 nach wie vor in Eingriff mit der vorderen Aussparung 103 der Arretierung 104 gehalten, so daß sich der Deckel 3 während seiner Schwenkbewegung nicht verschieben kann. Aufgrund der Deckelschwenkbewegung wird der vordere Lüftungsspalt 15 gebildet, durch den der Luftstrom 26 hindurchtreten kann. Der Bolzen 112 der Verbindungsstange 108 wird von der Arretierung 104 weiterhin in der hinteren Aussparung 114 des Schlittens 87 gehalten, so daß der hintere Schlitten 109 die Verschiebebewegung des vorderen Schlittens 87 nach hinten mitmacht. Der Bolzen 121 des hinteren Ausstellhebels 116 wandert entlang einem nach hinten leicht ansteigenden Teil 126 der Kulissenbahn 122, um während der Deckelschwenkbewegung die Deckelhinterkante 5 bezüglich ihrer Höhenlage mit der festen Dachfläche 1 ausgerichtet zu halten.

Bei weiterem Rückwärtsschieben der miteinander gekoppelten Schlitten 87 und 109 bewegt sich der Bolzen 117 des hinteren Ausstellhebels 116 in der Führungsbahn 118 der hinteren Ausstellkulisse 119 nach unten, wodurch der Ausstellhebel 116 um den Gelenkstift 115 verschwenkt wird. Dabei tritt der Bolzen 120 über eine Ausnehmung 128 in der oberen Begrenzungsfläche der Führungsbahn 110 aus dieser Führungsbahn nach oben heraus. Der Deckel 3 wird von dem Ausstellhebel 116 im Bereich seiner Hinterkante 5 über die feste Dachfläche 1 ausgestellt. Der hintere Schlitten 109 stößt schließlich mit seinem hinteren Ende an einem dachfesten Anschlag 129 an (Fig. 22). Der Bolzen 121 hat jetzt das hintere Ende der Kulissenbahn 122 erreicht.

In dieser Stellung befinden sich die vordere Aussparung 103 der Arretierung 104 und die vordere Aussparung 106 des Schlittens 87 in Deckung, während gleichzeitig die hinteren Aussparungen 113 und 114 der Arretierung 104 und des Schlittens 87 miteinander in Längsrichtung ausgerichtet sind. Bei geringer weiterer Verschiebung des Schlittens 87 nach hinten drückt eine Schräge 130, welche die Aussparung 114 nach vorne begrenzt, den Bolzen 112 aus der Aussparung 114 heraus und nach oben in die Aussparung 113 der Arretierung 104 hinein. Dadurch wird die Kupplung zwischen dem vorderen Schlitten 87 und dem hinteren Schlitten 109 aufgehoben, und der hintere Schlitten 109 wird über die Verbindungsstange 108 gegen eine Verschiebung mit Bezug auf die Führungsschiene 84 gesichert. Bei weiterem Verschieben des Schlittens 87 nach hinten verhindern zunächst die Oberseite des Schlittens 87 und dann das Antriebskabel 48, daß der Bolzen 112 aus der Aussparung 113 herausrutscht (Fign. 26 und 27). Des weiteren trifft eine Drucknase 132 des vorderen Ausstellhebels 88 auf die tiefer als der Bolzen 101 liegende Hilfsnase 102 der Deckelarretierungsstange 98. Dadurch wird im Zusammenwirken des Bolzens 101 mit einer hinteren Schräge 133 der Aussparung 103 der Bolzen 101 aus der Aussparung 103 in die Aussparung 106 des Schlittens 87 gedrückt. Infolgedessen wird die Arretierung des Deckels 3 gegenüber Verschiebebewegungen aufgehoben; stattdessen wird der Deckel 3 über die Stange 98 mit dem Schlitten 87 auf Mitnahme verbunden. Die obere Begrenzungsfläche der Führungsbahn 86 verhindert, daß der Bolzen 101 beim weiteren Verschieben des Schlittens 87 nach hinten die Aussparung 106 verläßt.

Der Deckel 3 kann nunmehr über die feste Dachfläche 1 zurückgeschoben werden, bis der vordere Schlitten 87 an einem Anschlag 134 des hinteren Schlittens 109 anstößt (Fig. 23).

Die vordere deckelfeste Führungsbahn 97 fällt in ihrem hinteren Bereich 135 schräg nach hinten ab, um beim Ausstellen der Deckelhinterkante die Deckelvorderkante um einen gewissen Betrag anzuheben (Fig. 22). Weil die hintere deckelfeste Kulissenbahn 122 einen nach vorne ansteigenden vorderen Abschnitt 136 aufweist und außerdem die Führungsschiene 84 nach oben gewölbt ist, ist sichergestellt, daß beim Zurückschieben des Deckels 3 die Deckelhinterkante 5 nicht übermäßig weit über die feste Dachfläche 1 hochsteigt.

Das Schließen des Deckels 3 geschieht in umgekehrter Reihenfolge. Erreicht der Deckel 3 ausgehend von der Stellung gemäß Fig. 23 die in Fig. 22 dargestellte Position, wird eine weitere Vorbewegung des Deckels durch Anstoßen an dem Anschlag 125 verhindert. Sobald die Aussparungspaare 103, 106 und 113, 114 von Schlitten 87 und Arretierung 104 wieder in Deckung gebracht sind, drückt eine hintere Schräge 137 der vorderen Schlittenausnehmung 106 den Bolzen 101 in die Aussparung 103, während eine Drucknase 138 des Schlittens 87 den Bolzen 112 zum Übergang in die hintere Aussparung 113 der Arretierung 104 zwingt. Dann wird der Deckel 3 in die Lüftungsposition gemäß Fig. 21 abgesenkt. Bei weiterem Vorbewegen des Schlittens 87 wird der Deckel schließlich vorne angehoben und geschlossen.

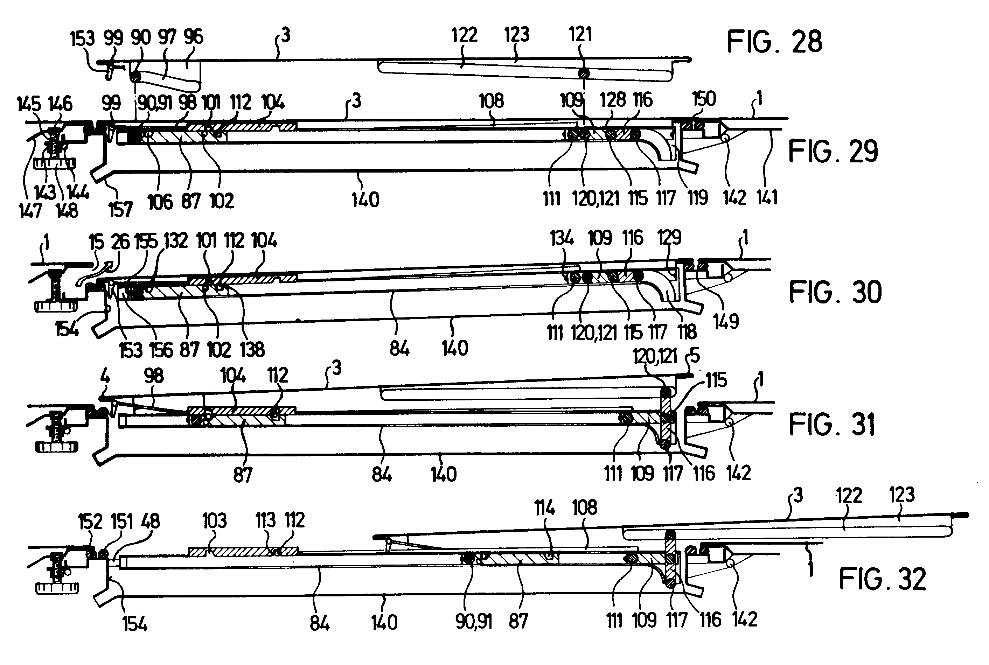

In den Fign. 28 bis 33 ist eine weitere Ausführungsform des Fahrzeugdaches dargestellt, die weitgehend ähnlich derjenigen nach den Fign. 18 bis 27 ist. Infolgedessen seien im folgenden nur diejenigen Merkmale erläutert, in denen sich die weiter abgewandelte Ausführungsform von der vorstehend diskutierten Lösung unterscheidet.

Entsprechend den Fign. 29 bis 32 sind die Führungsschienen 84 auf einem Rahmen 140 montiert, der an seinem hinteren Ende mit einer dachfesten Verstärkungsschiene 141 über ein Gelenk 142 verbunden ist, das eine Schwenkbewegung des Rahmens 140 um eine quer zur Deckelverschieberichtung verlaufende Achse erlaubt. Am vorderen (in den Fign. 29 bis 32 linken) Ende des Rahmens 140 ist eine Gewindehülse 143 angeordnet, die mit dem Rahmen 140 über ein Gelenk 144 verbunden ist. In die Gewindehülse 143 greift ein Gewindebolzen 145 ein, der über ein Lager 146 mit einem dachfesten Teil 147 drehbar aber axial unverschiebbar verbunden ist. Der Gewindebolzen 145 steht an seinem unteren Ende mit einem Drehgriff 148 in fester Verbindung.

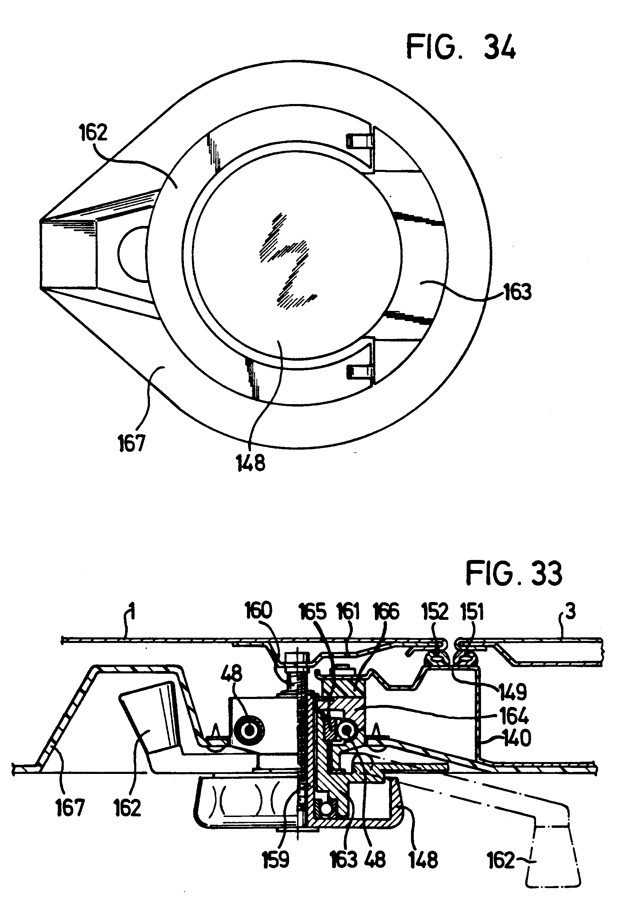

Der Rahmen 140 weist eine ringsumlaufende Rahmenerhöhung 149 auf, die unter dem Randspalt 150 sitzt, den der geschlossene Deckel 3 mit dem Rand des Dachausschnitts 2 bildet. Auf der Rahmenerhöhung 149 sind eine ringsumlaufende Deckeldichtung 151 und eine danebenliegende, gleichfalls ringsumlaufende Rahmendichtung 152 befestigt. Bei in Schließstellung befindlichem Deckel 3 (Fign. 29 und 33) sorgt die Deckeldichtung 151 für eine Abdichtung zwischen dem Deckel 3 und dem Rahmen 140, während gleichzeitig die Rahmendichtung 152 eine Abdichtung zwischen dem Rahmen 140 und der festen Dachhaut 1 bewirkt. Bei den Dichtungen 151 und 152 kann es sich um Hohlkammerdichtungen handeln (Fig. 33). Beide Dichtungen sind zweckmäßig zu einem einstückigen Dichtungsprofil zusammengefaßt.

Die vordere Ausstellkulisse 93 und der vordere Ausstellhebel 88 entfallen. Die Kulissenstifte 90 und 91 sind unmittelbar am vorderen Ende des vorderen Schlittens 87 angebracht. Unter der Deckelvorderkante 4 sitzt ein Deckelanschlag 153, der sich in der Deckelschließstellung, in der Lüftungsstellung mit abgesenkter Deckelvorderkante sowie in Zwischenstellungen zwischen diesen beiden Stellungen gegen eine Rahmenwand 154 anlegt. Die Drucknase 132 ist unmittelbar am Schlitten 87 angebracht.

Der Deckel 3 läßt sich aus der Schließstellung gemäß Fig. 29 mit seinem vorderen Rand 4 unter die feste Dachfläche 1 absenken, indem der Rahmen 140 durch Betätigen des Drehgriffs 148 um das Gelenk 142 verschwenkt wird. Dadurch wird im Bereich des vorderen Randes des Dachausschnitts der Lüftungsspalt 15 für den Durchtritt des Luftstroms 26 gebildet (Fig. 30). Während des Übergangs von der Stellung nach Fig. 29 in die Stellung gemäß Fig. 30 bleibt der Schlitten 87 in seiner vorderen Endstellung stehen, in welcher ein am vorderen Ende des Schlittens 87 sitzender Anschlag 155 an einem Widerlager 156 der Führungsschiene 84 anstößt. Wird dann der Schlitten 87 nach hinten geschoben, wird der Deckel 3 über die Arretierungsstange 98 zunächst weiter in seiner vorderen Endstellung gehalten. Der Kulissenstift 90 am Schlitten 87 wandert in der Führungsbahn 97 nach hinten und unten, wodurch der Deckel 3 im Bereich seiner Vorderkante etwas angehoben wird (Fig. 31). Gleichzeitig wird über die Verbindungsstange 108 der hintere Schlitten 109 nach hinten mitgenommen. Dadurch wird der Ausstellhebel 116 verschwenkt, und der Deckel 3 wird mit seiner Hinterkante 5 über die feste Dachfläche 1 ausgestellt, wie dies oben in Verbindung mit der Fig. 22 im einzelnen erläutert ist.

Bei weiterem Verfahren des vorderen Schlittens 87 nach hinten gibt die Arretierung 104 die Arretierungsstange 98 frei, während der vordere Schlitten 87 von dem hinteren Schlitten 109 entkuppelt und der hintere Schlitten über die Verbindungsstange 108 von der Arretierung 104 festgehalten wird. Der Deckel wird über die feste Dachfläche 1 nach hinten geschoben (Fig.32).

Weil bei diesem Ausführungsbeispiel die Lüftungsstellung mit vorne abgesenktem Deckel durch Verschwenken des Rahmens 140 erreicht wird, können die Führungsschiene 84 und die Kulissenbahn 122 geradlinig ausgebildet werden. Gegenüber den Ausführungsformen nach den Fign. 4 bis 8 entfällt auch die Wasserrinne 8 an der Deckelvorderkante. Wasser wird vielmehr vom Rahmen 140 aufgefangen und über Abläufe 157 abgeleitet.

Die Fign. 33 und 34 zeigen ein Ausführungsbeispiel eines manuellen Antriebs für das Dach gemäß den Fign. 28 bis 32. Das Verstellen des Deckels in die Lüftungsstellung mit abgesenkter Vorderkante einerseits sowie das Ausstellen und Verschieben des Deckels andererseits geschehen durch getrennte Antriebselemente, die jedoch zu einer Einheit zusammengefaßt sind. Für das Verschwenken des Rahmens 140 ist dabei eine Anordnung ähnlich den Fign. 29 bis 32 vorgesehen. In diesem Falle ist an dem Drehgriff 148 eine Gewindehülse 159 angeformt, die mit einem Gewindebolzen 160 in Gewindeeingriff steht. Der im wesentlichen lotrecht stehende Gewindebolzen 160 ist mit seinem oberen Ende an einem dachfesten Verstärkungsblech 161 fest angebracht. Beim Drehen des Drehgriffs 148 bewegt sich die Gewindehülse 159 an dem mit dem Verstärkungsblech 161 verdrehsicher verbundenen Gewindebolzen 160 nach oben bzw. nach unten.

Das Ausstellen und Verschieben des Deckels 3 erfolgen über eine Klappkurbel 162, die mit einer Kurbelbasis 163 schwenkbar verbunden ist. Die Kurbelbasis 163 ist über den Gewindebolzen 160 des Drehgriffs 148 gesteckt und auf dem Gewindebolzen 160 sowie in einem Kurbelgehäuse 164 drehbar gelagert. Die Kurbelbasis 163 ist mit einem Antriebsritzel 165 drehsicher verbunden. Das Antriebsritzel 165 steht seinerseits mit den beiden Antriebskabeln 48 in Eingriff. Das Kurbelgehäuse 164 ist über ein elastisches Element 166 mit dem Rahmen 140 verbunden. Das Element 166 gleicht die Schwenkbewegung beim Absenken des Rahmens aus. Eine Verkleidung ist bei 167 dargestellt.

Es versteht sich, daß im Rahmen der Erfindung zahlreiche Abwandlungen der vorstehend im einzelnen erörterten Ausführungsbeispiele möglich sind. Beispielsweise kann zur Schwenkverbindung des Rahmens 140 mit einem dachfesten Teil, wie der Verstärkungsschiene 141, an Stelle des Gelenks 142 auch ein elastisches Zwischenteil vorgesehen sein. Die Führungsschienen können gegebenenfalls selbst die Funktion des Rahmens 140 mitübernehmen und für diesen Zweck aus einem geeigneten Strangpreßprofil bestehen. An Stelle der aus Gewindehülse und Gewindebolzen bestehenden Gewindespindel kann auch ein beliebiges anderes Hubelement, beispielsweise in Form einer Kulisse, vorgesehen sein. Der Antrieb kann wahlweise manuell oder motorisch erfolgen.

## Patentansprüche

1. Fahrzeugdach mit einem in einer festen Dachflache (1) ausgebildeten Dachausschnitt (2), der mittels eines Deckels (3) wahlweise verschlossen oder mindestens teilweise freigelegt werden kann, wobei der Deckel durch Verschwenken um eine an oder nahe seiner Vorderkante (4) liegende Schwenkachse mit seiner Hinterkante (5) über die Dachfläche ausstellbar und über der Dachfläche nach hinten verschiebbar ist, **dadurch gekennzeichnet,** daß der Deckel (3) wahlweise auch um eine an oder nahe seiner Hinterkante liegende Schwenkachse in eine Lüftungsstellung schwenkbar ist, in welcher die Deckelvorderkante (4) unter Ausbildung eines im Bereich des vorderen Randes des Dachausschittes (2) liegenden Lüftungsspaltes (15) unter die Dachfläche (1) abgesenkt ist.

2. Fahrzeugdach nach Anspruch 1, dadurch gekennzeichnet, daß die Hinterkante (5) des Deckels (3) mindestens näherungsweise in Höhe der festen Dachfläche (1) gehalten ist, wenn die Deckelvorderkante (4) in die Lüftungsstellung abgesenkt ist.

3. Fahrzeugdach nach Anspruch 1 oder 2, dadurch gekennzeichnet, daß der Deckel (3) mit einer Verstellmechanik verbunden ist, die bei gleichsinniger Betätigung in der einen Richtung den Deckel ausgehend von der Schließstellung zunächst in die Lüftungsstellung mit abgesenkter Vorderkante (4) bringt, dann den Deckel (3) mit seiner Hinterkante (5) ausstellt und schließlich den ausgestellten Deckel nach hinten schiebt, und die bei gleichsinniger Betätigung in der entgegengesetzten Richtung den zurückgeschobenen Deckel in seine vordere Endstellung mit ausgestellter Hinterkante bringt, dann den Deckel in die Lüftungsstellung mit abgesenkter Vorderkante überführt und schließlich den Deckel in die Schließstellung bringt.

4. Fahrzeugdach nach Anspruch 3, dadurch gekennzeichnet, daß beim Verstellen des Deckels (3) von der Lüftungsstellung mit abgesenkter Vorderkante (4) in die zurückgeschobene Stellung die Deckelvorderkante vor und/oder während der Deckelverschiebebewegung zu einer nach oben gerichteten Bewegung veranlaßt wird.

5. Fahrzeugdach nach einem der vorhergehenden Ansprüche, dadurch gekennzeichnet, daß vor dem Zurückschieben des Deckels (3) die Deckelhinterkante (5) so weit über die Dachfläche (1) ausgestellt wird, daß zwischen der Deckelhinterkante und der Dachfläche ein Lüftungsspalt (27) entsteht.

6. Fahrzeugdach nach einem der Ansprüche 3 bis 5, dadurch gekennzeichnet, daß die Verstellmechanik zu beiden Seiten des Deckels (3) jeweils eine mit einem Antrieb (Antriebskabel 48, Antriebsmotor 50) verbundene, in der Deckelverschieberichtung längsbewegbar geführte Steuerkulisse (46) und einen jeder Steuerkulisse zugeordneten, gleichfalls in der Deckelverschieberichtung längsbewegbar geführten Schlitten (39) aufweist, auf dem ein vorderer und ein hinterer Ausstellhebel (53, 54) jeweils um eine quer zur Deckelverschieberichtung verlaufende Schwenkachse (Schwenkbolzen 51, 52) verschwenkbar gelagert sind, wobei die Ausstellhebel jeweils einerseits an der Steuerkulisse (46) und andererseits an einem deckelfesten Teil (Deckelträger 62) angreifen.

7. Fahrzeugdach nach Anspruch 6, dadurch gekennzeichnet, daß die Ausstellhebel (53, 54) jeweils in ihrem mittleren Bereich auf dem Schlitten (39) gelagert sind und mit ihren einander zugewendeten Enden an der Steuerkulisse (46) sowie mit ihren voneinander abgewendeten Enden an dem deckelfesten Teil (Deckelträger 62) angreifen.

8. Fahrzeugdach nach Anspruch 6 oder 7, dadurch gekennzeichnet, daß jeweils einer der beiden Ausstellhebel (53) an dem deckelfesten Teil (Deckelträger 62) angelenkt ist, und daß der andere der beiden Ausstellhebel (54) mit dem deckelfesten Teil schwenkbar sowie gegenüber dem deckelfesten Teil um eine begrenzte Strecke längsverschiebbar verbunden ist.

9. Fahrzeugdach nach einem der Ansprüche 6 bis 8, dadurch gekennzeichnet, daß jeder der beiden Ausstellhebel (53, 54) einen in eine Kurvenbahn (59) der Steuerkulisse (46) eingreifenden Kulissenstift (57, 58) trägt.

10. Fahrzeugdach nach einem der Ansprüche 6 bis 9 mit dachfesten, zu beiden Seiten des Dachausschnittes (2) angeordneten und sich in der Deckelverschieberichtung erstreckenden Führungsschienen (38), dadurch gekennzeichnet, daß die Schlitten (39) entlang den Führungsschienen (38) verschiebbar geführt sind und die Steuerkulissen (46) ihrerseits auf dem jeweils zugehörigen Schlitten (39) in Deckelverschieberichtung gleitbeweglich gelagert sind.

11. Fahrzeugdach nach einem der Ansprüche 6 bis 10, dadurch gekennzeichnet, daß die zu beiden Seiten des Deckels (3) angeordneten Steuerkulissen (46) jeweils mit einem einen Teil des Antriebs bildenden drucksteifen Antriebskabel (48) fest verbunden sind.

12. Fahrzeugdach nach einem der Ansprüche 6 bis 11, dadurch gekennzeichnet, daß bei in seiner vorderen Endstellung stehendem Deckel (3) die Schlitten (39) gegen eine Verschiebebewegung arretiert sind.

13. Fahrzeugdach nach einem der Ansprüche 6 bis 12, dadurch gekennzeichnet, daß für die Verschiebebewegungen des Deckels (3) die Schlitten (39) mit der jeweiligen Steuerkulisse 46 auf Mitnahme kuppelbar sind.

14. Fahrzeugdach nach Ansprüchen 12 und 13, gekennzeichnet durch einen die Schlittenverschiebebewegungen mitmachenden Riegel (66), der in Abhängigkeit von den Verschiebebewegungen der zugehörigen Steuerkulisse (46) wechelweise mit einer dachfesten Arretierung (69) oder mit der Steuerkulisse (46) in Eingriff kommt.

15. Fahrzeugdach nach einem der Ansprüche 3 bis 5, dadurch gekennzeichnet, daß die Verstellmechanik zu beiden Seiten des Deckels (3) jeweils eine deckelfeste Kulissenanordnung (96, 123) und eine dachfeste Kulissenanordnung (93, 119) aufweist, mit denen eine Ausstellhebelanordnung (88, 116) zusammenwirkt, die in Führungsbahnen (92, 97, 118, 122) der beiden Kulissenanordnungen eingreifende Kulissenstifte (90, 91, 117, 121) trägt.

16. Fahrzeugdach nach Anspruch 15, dadurch gekennzeichnet, daß der Deckel (3) mit einem in der Deckelverschieberichtung verstellbar geführten vorderen Schlitten (87) in Antriebsverbindung steht, der seinerseits mit einem Antrieb ständig verbunden ist.

17. Fahrzeugdach nach Anspruch 16, gekennzeichnet durch ein an oder nahe der Deckelvorderkante (4) an dem Deckel (3) angreifendes Kupplungsteil (Deckelarretierungsstange 98), das während des Verschwenkens des Deckels zwischen der Lüftungsstellung mit abgesenkter Vorderkante und der ausgestellten Lage mit einem dachfesten Teil (Arretierung 104) und für die Verschiebebewegung des Deckels mit dem vorderen Schlitten (87) in Eingriff gehalten ist.

18. Fahrzeugdach nach einem der Ansprüche 15 bis 17, dadurch gekennzeichnet, daß die Ausstellhebelanordnung einen hinteren Ausstellhebel (116) aufweist, der an einem in der Deckelverschieberichtung verstellbar geführten hinteren Schlitten (109) angelenkt ist, der während des Verschwenkens des Deckels (3) zwischen der Lüftungsstellung mit abgesenkter Vorderkante und der ausgestellten Lage mit über die Dachfläche angehobener Hinterkante mit dem Antrieb gekuppelt ist und der während Verschiebebewegungen des Deckels mit einem dachfesten Teil (Arretierung 104) in Eingriff gehalten ist.

19. Fahrzeugdach nach Anspruch 18, dadurch gekennzeichnet, daß zum Kuppeln des hinteren Schlittens (109) mit dem Antrieb ein Mitnehmer (Verbindungsstange 108) vorgesehen ist, der eine lösbare Verbindung zwischen dem vorderen und dem hinteren Schlitten (87, 109) herstellt.

20. Fahrzeugdach nach einem der Ansprüche 15 bis 19, dadurch gekennzeichnet, daß die Ausstellhebelanordnung jeweils zusätzlich einen an dem vorderen Schlitten (87) angelenkten vorderen Ausstellhebel (88) aufweist.

21. Fahrzeugdach nach einem der vorhergehenden Ansprüche, dadurch gekennzeichnet, daß die Führungsschienen (84) bzw. ein die Führungsschienen tragender Rahmen (140) gegenüber der festen Dachfläche (1) um eine nahe dem hinteren Rand des Dachausschnittes (2) liegende Achse schwenkbar gelagert sind und der Deckel (3) durch eine Schwenkbewegung der Führungsschienen zwischen seiner Schließstellung und der Lüftungsstellung mit abgesenkter Deckelvorderkante (4) verstellbar ist.

22. Fahrzeugdach nach Anspruch 21, dadurch gekennzeichnet, daß der Rahmen (140) vorne mit einer Hubeinrichtung zur wahlweisen Höhenverstellung des Rahmens verbunden ist.

23. Fahrzeugdach nach Anspruch 21 oder 22, dadurch gekennzeichnet, daß der Rahmen (140) eine im Randbereich des Dachausschnitts (2) umlaufende Dichtungsanordnung (Deckeldichtung 151, Rahmendichtung 152) für eine Abdichtung zwischen dem Rahmen und der festen Dachfläche (1) und für eine Abdichtung zwischen dem Rahmen und dem Deckel (3) trägt.

24. Fahrzeugdach nach einem der Ansprüche 21 bis 23, dadurch gekennzeichnet, daß der Deckel (3) vor einem von der vorderen Deckelendstellung ausgehenden Verschieben nach hinten sowohl vorne als auch hinten über die feste Dachfläche (1) anhebbar ist.

25. Fahrzeugdach nach einem der Ansprüche 21 bis 24, gekennzeichnet durch eine Betätigungseinrichtung in Form einer Baueinheit aus einem Drehgriff (148) zum Verschwenken des Rahmens (140) und einer Kurbeleinrichtung zum Ausstellen und Verschieben des Deckels (3).

26. Fahrzeugdach nach einem der Ansprüche 15 bis 25, dadurch gekennzeichnet, daß die Führungsbahn (97, 122) der deckelfesten Kulissenanordnung (96, 123) einen nach hinten abfallenden Teil (135) zum Anheben der Deckelvorderkante (4) vor oder während des Zurückschiebens des Deckels (3) aufweist.

27. Fahrzeugdach nach einem der Ansprüche 15 bis 26, dadurch gekennzeichnet, daß der hintere Ausstellhebel (116) in der Deckelschließstellung gegen unbeabsichtigtes Aufstellen gesichert ist.

28. Fahrzeugdach nach einem der Ansprüche 15 bis 27, dadurch gekennzeichnet, daß der hintere Ausstellhebel (116) bei mit seiner Hinterkante (5) ausgestelltem Deckel (3) eine mindestens näherungsweise lotrechte Stellung einnimmt.

29. Fahrzeugdach nach einem der vorhergehenden Ansprüche, gekennzeichnet durch einen unterhalb der festen Dachfläche (1) angeordneten festen Dachhimmel (18, 18'), der einen unter dem Dachausschnitt (2) liegenden Himmelausschnitt (19) aufweist, der mittels eines verstellbaren Himmels (Rollovorrichtung (20) verschließbar ist.

30. Fahrzeugdach nach Anspruch 29, dadurch gekennzeichnet, daß als verstellbarer Himmel eine Rollovorrichtung (20) mit einer auf eine Wickelspule (22) aufwickelbaren Rollostoffbahn (21) vorgesehen ist.

31. Fahrzeugdach nach Anspruch 30, dadurch gekennzeichnet, daß die Wickelspule (22) quer zur Deckelverschieberichtung hinter dem Dachausschnitt (2) und dem Himmelausschnitt (19) zwischen der Dachfläche (1) und dem festen Dachhimmel (18, 18') gelagert ist.

32. Fahrzeugdach nach Ansprüchen 30 und 31, dadurch gekennzeichnet, daß bei einer Blechdeckelausführung das vordere freie Ende der Rollostoffbahn (21) bzw. eine damit verbundene Rolloendleiste (23) mit dem Deckel (3) auf Mitnahme in der Verschieberichtung gekuppelt ist.

33. Fahrzeugdach nach Ansprüchen 30 und 31, dadurch gekennzeichnet, daß bei einer Glasdeckelausführung die Rollovorrichtung (20) beliebig von Hand betätigbar und die Rollostoffbahn (21) in ausgezogener Stellung fixierbar ist.

34. Fahrzeugdach nach einem der Ansprüche 29 bis 33, dadurch gekennzeichnet, daß der feste Dachhimmel (18, 18') vor und/oder hinter dem Himmelausschnitt (19) mit mindestens einem Lüftungsgitter (25, 36) versehen ist.

## Claims

1. A vehicle roof with, constructed in a fixed roof skin (1) a roof opening (2) which can by means of a cover (3) be optionally closed or at least left partially open, whereby it is possible for the cover to be opened and displaced rearwardly over the roof skin by being pivoted about a pivot axis disposed on or near its front edge (4), characterised in that the cover (3) is pivotable also about a pivot axis disposed on or close to its rear edge and into a ventilation position, if required, in which the front edge (4) of the cover is lowered under the roof skin (1) to form a ventilation gap (15) in the region of the front edge of the roof opening (2).

2. A vehicle roof according to Claim 1, characterised in that the rear edge (5) of the cover (3) is supported at least approximately at the height of the fixed roof skin (1) when the front edge (4) of the cover is lowered into the ventilation position.

3. A vehicle roof according to Claim 1 or 2, characterised in that the cover (3) is connected to a displacement mechanism which, upon equidirectional actuation in one direction moves the cover from the closed position firstly into the ventilation position with a lowered front edge (4) then raises the rear edge (5) of the cover (3) and finally pushes the raised cover rearwardly and which upon equidirectional actuation in the opposition direction moves the pushed-back cover into its extreme forwards position with a raised rear edge and then moves the cover into the ventilation position with a lowered front edge and finally moves the cover into the closed position.

4. A vehicle roof according to Claim 3, characterised in that when displacing the cover (3) from the ventilation position with a lowered front edge (4) into the pushed-back position the front edge of the cover is caused to perform an upwardly directed movement prior to and/or during displacement of the cover.

5. A vehicle roof according to one of the preceding Claims, characterised in that prior to the cover (3) being pushed back, the rear edge (5) of the cover is opened sufficiently above the roof skin (1) that there is a ventilation gap (27) between the rear edge of the cover and the roof skin.

6. A vehicle roof according to one of Claims 3 to 5, characterised in that the displacement mechanism has on both sides of the cover (3) in each case a control link (46) connected to a drive (drive cable 48, driving motor 50) and guided for longitudinal movement in the direction of cover displacement and, associated with each control link and likewise constructed for longitudinal movement in the direction of cover displacement a carriage (39) on which a front and a rear ventilation lever (53, 54) are mounted to pivot in each case about a pivot axis (pivot bolt 51, 52) extending crosswise to the direction of cover displacement, the ventilation levers respectively engaging the control link (46) at one end and a part (cover carrier 62) which is integral with the cover.

7. A vehicle roof according to Claim 6, characterised in that the middle portions of the ventilation levers (53, 54) are mounted to slide on the carriage (39) their mutually facing ends engaging the control link (46) while their remotely directed ends engage the part (cover carrier 62) which is integral with the cover.

8. A vehicle roof according to Claim 6 or 7, characterised in that in each case one of the two ventilation levers (53) is articulated on the part (cover carrier 62) which is integral with the cover while the other of the two ventilation levers (54) is connected in pivotable manner to the part integral with the cover and is capable of longitudinal movement through a limited path in respect of the part integral with the cover.

9. A vehicle roof according to one of Claims 6 to 8, characterised in that each of the two ventilation levers (53, 54) carries a link pin (57, 58) engaging a curved track in the control link (46).

10. A vehicle roof according to one of Claims 6 to 9 with, integral with the roof and disposed on both sides of the roof opening (2), guide rails (38) extending in the direction of cover displacement, characterised in that the carriages (39) are guided for displacement along the guide rails (38) and the control links (46) are in turn mounted for sliding movement on the respective associated carriage (39) in the direction of cover displacement.

11. A vehicle roof according to one of Claims 6 to 10, characterised in that the control links (46) disposed on both sides of the cover (3) are in each case rigidly connected to a pressure-resistant drive cable (48) forming a part of the drive.

12. A vehicle roof according to one of Claims 6 to 11, characterised in that when the cover (3) is in its extreme forwards position the carriages (39) are locked against any displacement movement.

13. A vehicle roof according to one of Claims 6 to 12, characterised in that for the displacement movements of the cover (3) the carriages (39) can be coupled to and moved together with the respective control link (46).

14. A vehicle roof according to Claims 12 and 13, characterised by, participating in the displacement movements of the carriages, a latch (66) which as a function of the displacement movements of the associated control link (46), alternately engages a stop (69) integral with the roof or the control link (46).

15. A vehicle roof according to one of Claims 3 to 5, characterised in that the displacement mechanism comprises on both sides of the cover (3) respective link arrangements (96, 123) integral with the cover and a link arrangement (93, 119) integral with the roof, cooperating with which there is a ventilation lever arrangement (88, 116) carrying link pins (90, 91, 117, 121) which engage in guideways (92, 97, 118, 122) in the two link arrangements.

16. A vehicle roof according to Claim 15, characterised in that the cover (3) is connected to and driven by a front carriage (87) guided for displacement in the direction of cover displacement, the carriage (87) being in turn constantly connected to a drive.

17. A vehicle roof according to Claim 16, characterised by a coupling part (cover stop bar 98) engaging the cover (3) on or near the front edge (4) of the cover and which, during pivoting of the cover between the ventilation position with a lowered front edge and the opened position is supported by a part integral with the roof (stop 104) and for displacement movement of the cover is maintained in engagement with the front carriage (87).

18. A vehicle roof according to one of Claims 15 to 17, characterised in that the ventilation lever arrangement comprises a rear ventilation lever (116) articulated on a rear carriage (109) guided for displacement in the direction of cover displacement and which is coupled to the drive during the pivoting of the cover (3) between the ventilation position with a lowered front edge and the pushed-out position with the rear edge raised above the roof skin while being maintained in engagement with a part (stop 104) integral with the roof during displacement movements of the cover.

19. A vehicle roof according to Claim 18, characterised in that for coupling the rear carriage (109) to the drive a carrier means (connecting bar 108) is provided which establishes a separable connection between the front and rear carriages (87, 109).

20. A vehicle roof according to one of Claims 15 to 19, characterised in that the ventilation lever arrangement additionally has a front ventilation lever (88) articulated on the front carriage (87).

21. A vehicle roof according to one of the preceding Claims, characterised in that the guide rails (84) or a frame (140) carrying the guide rails is/are mounted to pivot in respect of the fixed roof skin (1) about an axis disposed close to the rear edge of the roof opening (2), the cover (3) being displaceable by a pivoting movement of the guide rails between its closed position and the ventilation position with the front edge (4) of the cover lowered.

22. A vehicle roof according to Claim 21, characterised in that the frame (140) is connected at the front to a lifting means for selective height adjustment of the frame.

23. A vehicle roof according to Claim 21 or 22, characterised in that the frame (140) has encircling the edge area of the roof opening (2) a sealing arrangement (cover seal 151, frame seal 152) for establishing a seal between the frame and the fixed roof skin (1) and for a seal between the frame and the cover (3).

24. A vehicle roof according to one of Claims 21 to 23, characterised in that prior to rearwards displacement from the extreme front position of the cover, the cover (3) can be raised above the fixed roof skin (1) both at the front and also at the rear.

25. A vehicle roof according to one of Claims 21 to 24, characterised by an actuating device in the form of a component consisting of a turning handle (148) for pivoting the frame (140) and a crank device for opening and moving the cover (3).

26. A vehicle roof according to one of Claims 15 to 25, characterised in that the guideway (97, 122) of the link arrangement (96, 123) which is integral with the cover comprises a rearwardly descending part (135) for raising the front edge (4) of the cover prior to or during the pushing back of the cover (3).

27. A vehicle roof according to one of Claims 15 to 26, characterised in that the rear ventilation lever (116) is, in the closed position of the cover, secured against being unintentionally raised.

28. A vehicle roof according to one of Claims 15 to 27, characterised in that when the cover (3) has its rear edge (5) raised, the rear ventilation lever (116) assumes an at least approximately vertical position.

29. A vehicle roof according to one of the preceding Claims, characterised by, disposed underneath the fixed roof skin (1), a headlining (18, 18') comprising under the roof opening (2) a headlining opening (19) which can be closed by means of an adjustable blind (roller blind 20).

30. A vehicle roof according to Claim 29, characterised in that as an adjustable blind a roller blind device (20) is provided which has a web of roller blind material (21) adapted to be wound onto a roller (22).

31. A vehicle roof according to Claim 30, characterised in that the roller (22) is mounted crosswise to the direction of cover displacement behind the roof opening (2) and the headlining opening (19) between the roof skin (1) and the fixed headlining (18, 18').

32. A vehicle roof according to Claims 30 and 31, characterised in that if the cover is made from sheet metal, the front free end of the web of roller blind material (21) or an end strip (23) connected thereto is coupled to the cover (3) in such a way that it can be moved in the direction of displacement.

33. A vehicle roof according to Claims 30 and 31, characterised in that if the cover is made from glass, the roller blind device (20) can as desired be actuated by hand and the web (21) of roller blind material can be fixed in the pulled-out position.

34. A vehicle roof according to one of Claims 29 to 33, characterised in that the fixed roof headlining (18, 18') is provided with at least one ventilation screen (25, 36) in front of and/or behind the headlining opening (19).

## Revendications

1. Toit de véhicule ayant une découpure de toit (2) pratiquée dans une surface fixe du toit (1), qui peut être, au choix, fermée ou ouverte au moins en partie au moyen d'un couvercle (3), toit dans lequel le couvercle peut, en pivotant autour d'un axe de pivotement se trouvant sur ou à proximité de son bord antérieur (4), sortir par son bord arrière (5) au-dessus de la surface du toit et coulisser sur la surface du toit vers l'arrière, toit de véhicule caractérisé en ce que le couvercle (3) peut aussi pivoter au choix autour d'un axe de pivotement se trouvant sur ou à proximité de son bord arrière, pour venir dans une position de ventilation dans laquelle le bord antérieur du couvercle (4) est abaissé sous la surface du toit (1) en formant une fente de ventilation (15) se trouvant dans la zone du bord antérieur de la découpure du toit (2).

2. Toit de véhicule selon la revendication 1, caractérisé en ce que le bord arrière (5) du couvercle (3) est maintenu, au moins de manière approchée, à la hauteur de la surface fixe du toit (1) quand le bord antérieur du couvercle (4) est abaissé en position de ventilation.

3. Toit de véhicule selon la revendication 1 ou 2, caractérisé en ce que le couvercle (3) est relié à un mécanisme de réglage qui, quand on l'actionne dans le même sens, entraîne dans l'un des sens le couvercle en sortant d'abord de la position de fermeture pour venir dans la position de ventilation avec le bord antérieur (4) abaissé, puis fait sortir le couvercle (3) par son bord postérieur (5) et enfin pousse le couvercle sorti vers l'arrière et qui, lors de l'actionnement dans le même sens, entraîne dans la direction opposée, le couvercle repoussé dans sa position finale antérieure avec son bord arrière sorti, puis amène le couvercle dans la position de ventilation avec le bord antérieur abaissé, et finalement place le couvercle dans la position de fermeture.

4. Toit de véhicule selon la revendication 3, caractérisé en ce que lors du déplacement du couvercle (3) de la position de ventilation avec le bord antérieur abaissé (4), dans la position repoussée, le bord antérieur du couvercle est soumis à un mouvement dirigé vers le haut avant et/ou pendant le mouvement de coulissement du couvercle.

5. Toit de véhicule selon l'une des revendications précédentes, caractérisé en ce qu'avant de repousser le couvercle (3), le bord postérieur du couvercle (3) est sorti au-dessus de la surface du toit assez loin pour obtenir, entre le bord postérieur du couvercle et la surface du toit, une fente de ventilation (27).

6. Toit de véhicule selon l'une quelconque des revendications 3 à 5, caractérisé en ce que le mécanisme de réglage présente des deux côtés du couvercle (3) respectivement une coulisse de commande (46) reliée à un organe d'entraînement (câble d'entraînement 48, moteur d'entraînement 50), guidée de façon à se déplacer longitudinalement dans le sens de coulissement du couvercle, et un chariot (39) associé à chaque coulisse de commande, guideéégalement de façon mobile longitudinalement dans le sens de coulissement du couvercle, chariot sur lequel sont montés un levier antérieur et un levier postérieur de sortie (53, 54) de façon à pouvoir pivoter autour d'un axe de pivotement (bouton de pivotement 51, 52) s'étendant perpendiculairement au sens de coulissement du couvercle, les leviers de sortie venant respectivement en prise d'une part sur la coulisse de commande (46) et d'autre part sur une partie solidaire du couvercle (support du couvercle 62).

7. Toit de véhicule selon la revendication 6, caractérisé en ce que les leviers de sortie (53, 54) sont montés respectivement dans leur zone moyenne sur le chariot (39) et viennent en prise par leurs extrémités tournées l'une vers l'autre, sur la coulisse de commande (46) ainsi que par leurs extrémités situées à l'opposé l'une de l'autre, sur la partie solidaire du couvercle (support de couvercle 62).

8. Toit de véhicule selon la revendication 6 ou 7, caractérisé en ce que respectivement l'un des deux leviers de sortie (53) est articulé sur la partie solidaire du couvercle (support de couvercle 62) et en ce que l'autre levier de sortie (54) est relié de façon à pouvoir pivoter à la partie solidaire du couvercle ainsi que de façon à pouvoir coulisser longitudinalement par rapport à la partie solidaire du couvercle sur une distance limitée.

9. Toit de véhicule selon l'une quelconque des revendications 6 à 8, caractérisé en ce que chacun des deux leviers de sortie (53, 54) porte une tige de coulisse (57, 58) venant en prise dans un chemin courbe (59) de la coulisse de commande (46).

10. Toit de véhicule selon l'une quelconque des revendications 6 à 9, muni de rails de guidage (38) disposés des deux côtés de la découpure du toit (2) et s'étendant dans le sens du coulissement du couvercle, caractérisé en ce que les chariots (39) sont guidés de façon à pouvoir coulisser le long des rails de guidage (38), tandis que les coulisses de commande (46) de leur côté, sont montées sur le chariot (39) correspondant de façon à pouvoir glisser dans le sens du coulissement du couvercle.

11. Toit de véhicule selon l'une quelconque des revendications 6 à 10, caractérisé en ce que les coulisses de commande disposées des deux côtés du couvercle (3) sont reliées respectivement à un câble d'entraînement (48) de façon solidaire, ce câble résistant à la pression formant une partie du mécanisme d'entraînement.

12. Toit de véhicule selon l'une quelconque des revendications 6 à 11, caractérisé en ce que, quand le couvercle (3) se trouve dans sa position terminale antérieure, les chariots (39) sont bloqués contre tout mouvement de poussée.

13. Toit de véhicule selon l'une quelconque des revendications 6 à 12, caractérisé en ce que pour les mouvements de coulissement du couvercle (3), on peut coupler les chariots (39) avec la coulisse de commande correspondante (46) pour l'entraînement.

14. Toit de véhicule selon les revendications 12 et 13, caractérisé par un verrou (66) effectuant en même temps les mouvements de coulissement des chariots, verrou qui, en fonction des mouvements de coulissement de la coulisse correspondante (46) vient en prise de façon alternative avec un dispositif d'arrêt solidaire du toit (69) ou avec la coulisse de commande (46).

15. Toit de véhicule selon l'une quelconque des revendications 3 à 5, caractérisé en ce que le mécanisme de réglage présente des deux côtés du couvercle (3) respectivement un dispositif à coulisse solidaire du couvercle (96, 123) et un dispositif à coulisse solidaire du toit (93, 119) avec lesquels coopère un dispositif de levier de sortie (88, 116) qui porte des tiges de coulisse (90, 91, 117, 121) venant en prise dans des chemins de guidage (92, 97, 118, 122) des deux dispositifs à coulisse.

16. Toit de véhicule selon la revendication 15, caractérisé en ce que le couvercle (3) est en liaison d'entraînement avec un chariot antérieur (87) guidé de façon à pouvoir être déplacé dans le sens de coulissement du couvercle, chariot qui, de son côté, est relié de façon permanente à un mécanisme d'entraînement.

17. Toit de véhicule selon la revendication 16, caractérisé par une pièce d'accouplement (tige de blocage du couvercle 98) venant en prise sur le couvercle (3) sur ou à proximité du bord antérieur du couvercle (4), cette pièce d'accouplement étant maintenue en prise pendant le pivotement du couvercle entre la position de ventilation, avec le bord antérieur abaissé, et pendant la position déployée, avec une pièce solidaire du toit (dispositif d'arrêt 104), et pour le mouvement de coulissement du couvercle, avec le chariot antérieur (87).

18. Toit de véhicule selon l'une quelconque des revendications 15 a 17, caractérisé en ce que le dispositif de leviers de sortie présente un levier de sortie postérieur (116) articulé sur un chariot (109) et guidé de façon à pouvoir se déplacer dans le sens de coulissement du couvercle, ce chariot étant accouplé au mécanisme d'entraînement pendant le pivotement du couvercle (3) entre la position de ventilation avec le bord antérieur abaissé, et la position déployée avec le bord postérieur soulevé au-dessus de la surface du toit, et ce chariot étant maintenu en prise avec une partie solidaire du toit (dispositif d'arrêt 104) pendant les mouvements de coulissement du couvercle.

19. Toit de véhicule selon la revendication 18, caractérisé en ce que pour accoupler le chariot postérieur (109) au mécanisme d'entraînement, il est prévu un dispositif d'entraînement (tige de liaison 108) qui établit une liaison détachable entre le chariot antérieur et le chariot postérieur (87, 109).

20. Toit de véhicule selon l'une quelconque des revendications 15 à 19, caractérisé en ce que le dispositif de leviers de sortie présente en outre un levier de sortie antérieur (88) articulé sur le chariot antérieur (87).

21. Toit de véhicule selon l'une quelconque des revendications précédentes, caractérisé en ce que les rails de guidage (84) ou un cadre (140) portant les rails de guidage sont montés de façon à pouvoir pivoter par rapport à la surface fixe du toit (1) autour d'un axe se trouvant à proximité du bord postérieur de la découpure du toit (2), et le couvercle (3) peut être déplacé par un mouvement de pivotement des rails de guidage entre sa position de fermeture et la position de ventilation avec le bord antérieur du couvercle (4) abaissé.

22. Toit de véhicule selon la revendication 21, caractérisé en ce que le cadre (140) est relié en avant à un dispositif de levage pour déplacer à volonté le cadre en hauteur.

23. Toit de véhicule selon la revendication 21 ou 22, caractérisé en ce que le cadre (140) porte un dispositif d'étanchéité (joint d'étanchéité 151 du couvercle, joint d'étanchéité 152 du cadre) entourant le bord de la découpure du toit (2) pour assurer l'étanchéité entre le cadre et la surface fixe du toit (1) et pour assurer l'étanchéité entre le cadre et le couvercle (3).

24. Toit de véhicule selon l'une quelconque des revendications 21 à 23, caractérisé en ce que le couvercle (3) peut être soulevé aussi bien en avant qu'en arrière au-dessus de la surface fixe du toit (1) avant un mouvement de coulissement vers l'arrière à partir de la position terminale antérieure du couvercle.

25. Toit de véhicule selon l'une quelconque des revendications 21 à 24, caractérisé par un dispositif d'actionnement sous forme d'une unité se composant d'une poignée tournante (148) servant à faire pivoter le cadre (140) et d'un dispositif à manivelle pour sortir et faire coulisser le couvercle (3).

26. Toit de véhicule selon l'une quelconque des revendications 15 à 25, caractérisé en ce que le chemin de guidage (97, 122) du dispositif à coulisse solidaire du couvercle (96, 123) présente une pièce (135) tombant vers l'arrière pour soulever le bord antérieur du couvercle (4) avant ou pendant le refoulement du couvercle (3).

27. Toit de véhicule selon l'une quelconque des revendications 15 à 26, caractérisé en ce que le levier de sortie postérieur (116) est bloqué dans la position de fermeture du couvercle contre tout déplacement involontaire.

28. Toit de véhicule selon l'une quelconque des revendications 15 à 27, caractérisé en ce que le levier de sortie postérieur (116) prend, quand le couvercle (3) a son bord postérieur (5) déployé, une position verticale au moins de façon approchée.

29. Toit de véhicule selon l'une quelconque des revendications précédentes, caractérisé par un plafond fixe (18, 18') disposé en dessous de la surface fixe du toit (1), plafond qui présente une découpure (19) se trouvant sous la découpure du toit (2), découpure (19) qui peut coulisser au moyen d'un plafond déplaçable (20) (store).

30. Toit de véhicule selon la revendication 29, caractérisé en ce qu'on prévoit comme plafond déplaçable un dispositif à store (20) avec un pan de store (21) pouvant s'enrouler sur une tringle d'enroulement (22).

31. Toit de véhicule selon la revendication 30, caractérisé en ce que la tringle d'enroulement (22) est montée perpendiculairement au dispositif de coulissement du couvercle en arrière de la découpure du toit (2) et de la découpure du plafond (19) entre la surface du toit (1) et le plafond fixe du toit (18, 18').

32. Toit de véhicule selon les revendications 30 et 31, caractérisé en ce que dans le cas d'une réalisation du couvercle en tôle, l'extrémité antérieure libre du pan de store (21) est une traverse terminale de store (23) reliée à ce pan et accouplée au couvercle (3) pour l'entraînement dans le sens du coulissement.

33. Toit de véhicule selon les revendications 30 et 31, caractérisé en ce que dans le cas d'une réalisation du couvercle en verre, le dispositif à store (30) peut être actionné à volonté à la main et le pan de store (21) peut être fixé dans la position déployée.

34. Toit de véhicule selon l'une quelconque des revendications 29 à 33, caractérisé en ce que le plafond (18, 18') est pourvu en avant et/ou en arrière de la découpure (19), d'au moins une grille de ventilation (25, 36).
